# EUROPEAN PATENT SPECIFICATION

(11) **EP 2 372 698 B1**
(45) Date of publication and mention of the grant of the patent: **16.12.2015**
(21) Application number: 11164131.2
(22) Date of filing: 26.04.2002
(51) Int. Cl.: G10L 15/22, H04M 3/493, G10L 15/18, H04L 29/08, G06F 17/30, G06Q 10/06, G06Q 30/02, G10L 15/26, H04M 3/42, H04M 3/02, H04W 4/20, H04W 4/02, G10L 15/30

(54) **Routing call failures in a location-based services system**
Leiten von Anrufsfehlern in standortbasiertem Dienstleistungssystem
Défauts d'appel de routage dans un système de services basé sur l'emplacement

(30) Priority: 27.04.2001 US 286916 P; 04.09.2001 US 946111; 25.04.2002 US 131898
(43) Date of publication of application: 05.10.2011
(62) Divisional of application: 02725826.8
(73) Proprietor: Accenture Global Services Limited, Dublin 4 (IE)
(72) Inventor: Gailey, Michael L., Dunwoody, GA GA 30338 (US); Portman, Eric, A., Norcross, GA Georgia GA 30092 (US); Burgiss, Michael, J., Smyrna, GA Georgia GA 30082 (US); Holmes, Chad, S., Atlanta, GA Georgia GA 30342 (US); King Smith, Angela, Atlanta, GA Georgia GA 30308 (US); Pitts, Ashton, F., III, Redondo Beach, CA California CA 90278 (US); Dempsen, Stephen, L., Redondo Beach, CA California CA 90227 (US); Che, Vinny, Wai-Yan, Alhambra, CA California CA 91801 (US)
(74) Representative: Boult Wade Tennant

(56) References cited:
- US-A- 5 479 488
- US-A- 5 638 425
- US-A- 6 052 439
- VICTOR ZUE ET AL: "JUPITER : A Telephone-Based Conversational Interface for Weather Information", IEEE TRANSACTIONS ON SPEECH AND AUDIO PROCESSING, IEEE SERVICE CENTER, NEW YORK, NY, US, vol. 8, no. 1, 1 January 2000 (2000-01-01) , XP011053991, ISSN: 1063-6676

## Description

### Field of the Invention

The present invention relates generally to providing information to communication devices and, more particularly, to providing location-based services targeted toward communication devices located in specific geographic areas.

### Background of the Invention

Wireless communication devices have recently evolved from a technology used by an elite segment of the population to a technology that is used by the masses. In the year 2000, it has been estimated that well over 100 million people in the United States alone subscribed to at least one type of wireless communication service. Worldwide, the number of wireless communication device users has reached a staggering number and is growing all of the time. In the near future, it is envisioned that almost everyone will own or use some sort of wireless communication device that is capable of performing a variety of functions.

In addition to traditional wireless communication devices, many different types of portable electronic devices are in use today. In particular, notebook computers, palm-top computers, and personal digital assistants (PDA) are commonplace. The use of wireless communication devices is widespread and it is expected that in the near future combined mobile telephone/PDA devices will be widely used by the masses. Currently, most of these devices are only used by a small segment of the population due, in large part, to the fact that there are a limited number of applications and services available for such devices.

The Internet has become a widely used medium for providing business information in a variety of forms that are targeted to various types of individuals and businesses. Generally speaking, one of the problems associated with searching for business information on specific products and services using the Internet is being able to locate relevant business information for products and services that are available in a geographic area that is located near the user. As such, a need exists for a way to provide a broad range of business information and content to wireless communication devices and workstations that are based on the respective geographic location of the communication device at the time the information is requested.

Users of several different types of remote terminals often desire to use directory assistance services that are provided by various telephone companies. Many of these directory assistance calls originate in a respective metropolitan telephone service area and request listing information for listings contained in the same metropolitan service area. Most local directory assistance services in use today are handled by an operator that assists the requestor by manually inputting the requested information into an application that searches a database containing residential and business listings. As such, a need exists for providing an enhanced directory assistance system that is capable of automatically providing geographically targeted responses to requestors.

In addition, most users of wireless communication devices would like the ability to use natural language when requesting information and content. Typical voice recognition applications require a developer to create an all-encompassing grammar that itemizes each possible way a person could utter any given concept or request. While this enables a system to recognize content contained in an utterance, it places a significant burden on the developer both before and after the system is deployed. As such, a need exists for a natural language processing application that does not require significant setup and maintenance. Additionally, due to the various speech patterns and utterances, it is currently impossible to obtain a near 100% successful recognition of utterances. While current speech recognition engines are tuned to interpret sound, they cannot interpret meaning or understanding of context.

Another need exists for methods and systems that allow business users of these types of systems to search through historical usage records. These records can be used by business users for various types of research and record keeping.

When consumers request information on a respective product or service using voice commands there is a chance that the system will not recognize the words that have been spoken and thus a voice enable system cannot locate the appropriate information. Often times this is frustrating to users who in turn, may eventually stop using voice enable systems if they experience errors. As such, a need exists for routing call failures in a location-based services system.

As set forth above, a need exists for location-based systems that allow users to search for relevant businesses, services or products based on the geographic location of the user. In order to monitor transactions completed or deals offered to consumers through the location-based system, a method and system is needed to track purchases and use of the location-based system.

US 5,479.488 relates to a telecommunications system, in which automatic directory assistance uses a voice processing unit comprising a lexicon of lexemes and data representing a predetermined relationship between each lexeme and calling numbers in a locality served by the automated directory assistance apparatus. The voice processing unit issues messages to a caller making a directory assistance call to prompt the caller to utter a required one of said lexemes. The unit detects the calling number originating a directory assistance call and, responsive to the calling number and the relationship data computes a probability index representing the likelihood of a lexeme being the subject of the directory assistance call. The unit employs a speech recognizer to recognize, on the basis of the acoustics of the caller's utterance and the probability index, a lexeme corresponding to that uttered by the caller. If the caller's response is not recognised, the unit hands off to a human operator and the operator's screen will display whatever data the automatic system has managed to determine from the caller and the recording of the caller's responses will be replayed.

### Summary of the Present Invention

According to a first aspect of the invention, there is provided a method for routing call failures as set out in claim 1. According to a second aspect of the invention, there is provided a call failure system for a location-based services system as set out in claim 9.

There is also disclosed a method of providing location-based services in a communication system that includes a plurality of remote terminals. Although preferentially the remote terminals comprise a wireless communication device location-based services may be provided to users of various types of computer workstations with Internet access. A tailored request for information is generated using the remote terminal. The nature of the tailored request for information will depend on the specific type of information that the user of the remote terminal is looking for.

As set forth briefly above, the tailored request for information is a request for information that is generated by a user of the remote terminal. The tailored request for information can be a directory assistance request, which includes the name of a person or business for which the user is searching. In addition, the tailored request for information can be in the form of a request for information concerning a specific product or service. For example, a user of the remote terminal may generate a tailored request for information that comprises a request for information about specials that may be offered on televisions or various other types of products from local retailers.

In addition to the tailored request for information, a geographic indicator is also generated that is associated with the remote terminal and is preferentially based on the present geographic location of the remote terminal. As set forth in detail below, the tailored request for information and the geographic indicator are used by the location-based services system to generate structured responses to the tailored request for information that are based on the geographic location in which the remote terminal is located.

After the tailored request for information and the geographic indicator are generated, both are transmitted to a location-based application server. The location-based application server is programmed with an application that generates a structured response to the tailored request for information. The structured response is generated based on the geographic indicator of the remote terminal and the particular type of information that has been requested by the user of the remote terminal. Once the location-based application server generates the structured response, it is transmitted to the remote terminal for use by a respective user of the remote terminal.

Optionally, the tailored request for information is in the form of a voice signal that is provided by a user of the remote terminal. The tailored request for information may also be transmitted to the location-based application server from the remote terminal in the form of a text-based message using a wireless application protocol. Further, the tailored request for information can also be transmitted to the location-based application server from a remote terminal using a web-based protocol. As such, the location-based services system provides users with a variety of ways to access the services provided by the system, which provides further benefits to users of the location-based services system by providing ease of access.

As set forth above, the geographic indicator that is generated and used by the location-based services system is based on a respective geographic location of the remote terminal. The geographic indicator can be defined by a user of the remote terminal. The geographic indicator may be generated by the remote terminal or a base station of the preferred wireless communication system. An enhanced 911 system may be used to determine the geographic location of remote terminals.

As set forth above, in response to the tailored request for information that is generated using the remote terminal, the location-based application server generates a structured response that contains data that is responsive to the tailored request for information. The structured response may be generated in the form of a voice signal or a text/graphic based structured response that is generated using a wireless application protocol or a web-based protocol. Regardless of the format of the structured response, the location-based application server transmits the structured response to the remote terminal in a format that a user can readily access and interact with using the remote terminal.

There is additionally disclosed a method of providing natural language processing in a communication system. A voice request is generated with a remote terminal that is transmitted to a base station. Once the voice request is sent to the base station, each word contained in the voice request is identified with a voice recognition application. After the words are identified with the voice recognition application, a grammar that is associated with each word is identified with a natural language processing application. Once the words and their associated grammars have been identified, each word is categorized into a respective grammar category. A structured response to the voice request is then generated with a response generation application.

A structured request is generated by the natural language processing application that is based on the categorization of the words into grammar categories as well as the identification of the words. After the structured request is generated, it is transmitted to a response generation application that searches for matches to the structured request in a database of products and services. There may also be a narrowing of structured responses that are generated by the response generation application to a specific geographic area in which the remote terminal is located. As such, a user of the remote terminal does not receive responses to voice requests that are for products or services that are not located in a geographic region near the user. For example, a person in Atlanta, Georgia does not particularly care if a retail store in California is running a special on an item that he or she is interested in purchasing near his/her geographic location.

As generally set forth above, the voice request is a request for a particular product or service. As used herein, the term "product" should be broadly construed to also include services. The structured responses that are generated to respond to the voice requests may either take the form of voice responses or text messages that may include images and/or sound files. After the voice response or the text message is generated, it is transmitted to the remote terminal so that the user of the remote terminal can interact with the structured response.

Coupling a natural language processing application to the location-based services system helps to bridge the gap between voice recognition and processing structured requests by improving speech recognition not only through the recognition of "utterances" but by also inferring the correct question and resulting answer through the use of natural language. Natural language processing improves user experience by inferring, through the use of linguistics, the word(s) that were not recognized, thus enabling the resulting application to retrieve a more relevant answer.

There is also disclosed a wireless communication system with natural language processing. A remote terminal is connected to a base station, wherein a user of the remote terminal is capable of generating a voice request that is transmitted to the base station. Once the voice request reaches the base station, it is preferentially transmitted to a voice recognition application that is connected to the base station. During operation, the voice recognition application identifies each word contained in the voice request. After the words are identified by the voice recognition application, a natural language processing application that is connected to the voice recognition application generates a structured request that is based on the words contained in the voice request. A response generation application is connected to the natural language processing application and is responsible for generating a structured response to the structured request.

The natural language processing application categorizes the words contained in the voice request into a respective one of a plurality of grammar categories. Once the words are placed in the grammar categories, they are used by the response generation application to locate a product identified in the voice request, thereby responding to the structured request. The structured response can be transmitted to the remote terminal as a voice response or a text message. If a voice response is used, a voice synthesis application that is connected to the response generation application generates the voice response, which is based on the structured response that is generated by the response generation application.

There is also disclosed a system and method for creating advertising content in a communication network. During operation, an advertising campaign parameter entry form is generated on a business remote terminal. Once generated, an advertiser enters advertising campaign parameters into the advertising campaign parameter entry form using the business remote terminal. After the advertising campaign parameters are entered, the advertising campaign parameters are transmitted to an advertiser portal. The advertiser portal then directs the advertising campaign parameters to a create campaign application. An advertising campaign is then created by the create campaign application that is based on the advertising parameters that are entered by the advertiser. The advertising campaign is then stored in a business database.

A campaign management interface application generates the advertising campaign parameter entry form and transmits it to a web browser on the business remote terminal. As such, the advertising data that is entered by the advertiser is preferentially transmitted to the advertiser portal using a mark-up language file. Advertising campaigns that are created to specific geographic regions that are located within a predetermined radius of consumers may also be limited.

An edit campaign application is provided on the advertiser portal that allows the business remote terminal to edit the advertising campaign after being stored in the business database. A delete campaign application is also provided on the advertiser portal that allows the business remote terminal to delete the advertising campaign after being stored in the business database. The business remote terminal may be a wireless communication device, which allows an advertiser to create, edit and delete advertising campaigns from virtually any location.

There is also disclosed a system and method for managing business listings in a communication network. A business listing entry form is generated on a business remote terminal. A business entity then enters business listing data into the business listing entry form using the business remote terminal. Once the business listing data has been entered, it is transmitted to an advertiser portal where it is directed to a create business listing application. The create business listing application then creates a business listing that is based on the business data that is provided by the business user. Once the business listing is created, it is stored in a business profile database.

Preferentially, the business listing data is entered into the form using a web browser on the business remote terminal. The business listing data is also preferentially transmitted from the business remote terminal to the advertiser portal using a mark-up language file. During operation, the create business listing application extracts the business listing data and places it in a predetermined arrangement that is suitable for the location-based services system. The predetermined set of business listing data is preferentially selected from a group of parameters consisting of a business name, a business category, a product type, a service type, a business address, a business URL, a product name, a model name, a brand name, a price, an address and an operating hours indication and other data unique to individual business locations.

An edit business listing application is provided on the advertiser portal that allows the business remote terminal to edit the business listing after being stored in the business profile database. A delete business listing application is also provided on the advertiser portal that allows the business remote terminal to delete the business listing after being stored in the business profile database. The business remote terminal may be a wireless communication device or a desktop computing system.

There is also disclosed a system and method for editing advertising content in a communication network. A predetermined advertising campaign that is associated with a respective advertiser is retrieved with a campaign management interface application located on an advertiser portal, wherein the advertising campaign includes a plurality of parameters. Once retrieved, the advertising campaign is transmitted to a business remote terminal, which generates a view of the advertising campaign. A user of the business remote terminal can then edit the parameters of the advertising campaign. After the advertiser is done editing, the advertising campaign is then transmitted back to an advertiser portal, which directs the advertising campaign to an edit campaign application. The edited advertising campaign is then stored in a business database using a data access component.

There is also disclosed a system and method for editing business listing content in a communication network. A predetermined business listing that is associated with a respective business is retrieved with a business profile interface application located on an advertiser portal, wherein said business listing includes a plurality of parameters. The business listing is then transmitted to a business remote terminal, which generates a view of the business listing. After the view of the business listing is generated, a user of the business remote terminal is allowed to edit the parameters of the business listing. Once the user is done editing the business listing it is transmitted back to the advertiser portal. The business listing is then directed to an edit business listing application and then stored in a business profile database using a data access component.

There is disclosed a method for providing advertising effectiveness searching capabilities in a location-based services system. Usage information for advertising campaigns placed on the location-based services system is stored in a usage data database. A search request form containing at least one input field is generated on a remote terminal. A search request is then entered into the search request form with the remote terminal. The search request is then transmitted to an advertising effectiveness application that is preferentially located on an advertiser portal that is connected to the location-based services system. The usage information is then searched to generate a response to the search request and the response is then transmitted to the remote terminal.

The usage information may be selected from a group of information including a time of access, a location of access, an identity of individuals who received a respective advertising campaign, a total number of people who received a respective advertising campaign, a total number of people who responded to a respective advertising campaign, a time and date a respective advertising campaign was run, a product listing for a respective advertising campaign and a service listing for a respective advertising campaign.

The search request form is preferentially generated on a web browser located on the remote terminal. A usage analysis user interface application generates the search request form and then transmits it to the remote terminal via the advertiser portal. The search results that are obtained from the usage data database may be formatted into viewable segments with a data scoring application. The usage analysis user interface application is preferentially used to transmit the response to the remote terminal. The remote terminal can be a wireless communication device.

There is also disclosed a method for providing predictive modeling in a location-based services system. Predictive modeling allows users to forecast or predict the types of users and numbers of users that are likely to respond to or receive advertising campaigns based on historical records that are contained in a usage data database. An advertising campaign is created with a remote terminal. The advertising campaign is then transmitted to a predictive modeling application that is preferentially located on an advertiser portal. A profile data file and a usage data database are then searched to generate a predictive model for the advertising campaign and the predictive model is then transmitted to the remote terminal.

The advertising campaign that has been created includes at least one business rule. The business rule is extracted with a business rule application that is located on the advertiser portal and is used to assist in searching the profile data files and the usage data database. A usage analysis user interface application is used to generate the sample advertising campaign. The predictive model is formatted in a viewable format using a data scoring application. The predictive model is preferentially transmitted to the remote terminal using a usage analysis user interface application. The remote terminal may be a wireless communication device.

There is also disclosed a method for searching usage information in a location-based services system. Usage information for the location-based services system is stored in a usage data database. An advertiser portal is provided to a remote terminal. A search request form is generated on the remote terminal that allows the user to generate a search. The user can then input a search request into the search request form using the remote terminal that is transmitted to the advertiser portal. The usage data database is then searched to generate a response to the search request that is transmitted to the remote terminal.

The search request form is generated with a usage analysis user interface application located on the advertiser portal. The search results are preferentially formatted into a viewable format with a data scoring application. The response is transmitted to the remote terminal with a usage analysis user interface application on the advertiser portal. The remote terminal may be a wireless communication device.

There is also disclosed a method and system for routing call failures in a location-based services system. A remote terminal is connected to the location-based services system using one of several different access methods. A voice-based tailored request for information is then generated by a user of the remote terminal and transmitted to the location-based services system. The voice-based tailored request for information is then interpreted with a voice recognition application. If the voice recognition application fails to interpret the voice-based tailored request for information to a predetermined level of accuracy, the remote terminal connection is routed to a call center server.

The call center server is preferentially operable to forward the connection to the remote terminal to an available operator. The operator can then assist the user of the remote terminal by entering a request for information from the user into a location-based application server that is designed to generate responses to user requests. The structured response is then transmitted to the remote terminal by the location-based services system. In the present preferred embodiment, the structured response is transmitted to a voice synthesis server that is capable of creating a voice response that is sent to the remote terminal.

There is also disclosed a method and system for routing call failures in a location-based services system. A remote terminal is connected to a location-based services system. A voice-based tailored request for information is generated by a user of the remote terminal that is transmitted to the location-based services system 10. The voice-based tailored request for information is then interpreted with a voice recognition application and the interpretation of the voice-based tailored request for information is transmitted from the voice recognition application to a natural language processing application. If the natural language processing application fails to interpret the intent of the voice-based tailored request for information to a predetermined level of accuracy then the remote terminal is routed or connected to a call center server.

There is also disclosed a method for tracking purchases in a location-based services system. A request for information on a particular product is received from a consumer using a remote terminal. A geographically tailored response to the request is then generated with the location-based services system. Then, at least one offer is displayed to the consumer that is based on the geographically tailored response. An acceptance of a respective offer made by the consumer is then processed by the location-based services system.

A campaign offer identifier is preferentially assigned to each offer or tailored response. Each campaign offer identifier and the contents of the offer itself are then stored in a usage database or data file. Each campaign offer identifier is also associated with a respective consumer and a respective business making the offer. If the consumer purchases a product, the consumer is charged for the product. Preferentially, an electronic payment card is charged for the product. Information about the electronic payment card is also preferably stored, wherein the information that is stored may be selected from a group of information including a card number, a merchant code, a merchant name, a merchant address, a transaction type, a identifier of products purchased, an amount of purchase, a date of purchase and a time of purchase.

The geographically tailored response can be generated based on a geographic setting made on the remote terminal by the consumer. As such, if the consumer is traveling from one location to another location they are able to receive responses that are tailored to the area they are traveling toward or their final destination. During operation, a plurality of information about each offer is stored in the usage database or data file. The information is selected from a group of information including a campaign identifier, a merchant name, a consumer identifier, a campaign code, a date, a time, a geographic location of said consumer and an offer number.

There is also disclosed a location-based services system with purchase tracking. This location-based services system includes a remote terminal that is capable of generating a tailored request for information on a product and a geographic indicator that is associated with the remote terminal. A location-based application server is connected to each remote terminal and is operable to receive the tailored requests for information and the geographic indicator from the remote terminal. The location-based application server is also operable to generate a structured response to the tailored request for information on the product that is dependent on the geographic indicator provided by the remote terminal. The structured response is preferentially transmitted to the remote terminal and displayed on the remote terminal in the form of at least one offer.

Further objects and advantages of the present invention will be apparent from the following description, reference being made to the accompanying drawings wherein preferred embodiments of the invention are clearly illustrated.

### Brief Description of the Drawings

Figure 1 illustrates a preferred embodiment of the location-based services system.
Figure 2 is a flow chart illustrating the process steps performed by the location-based application server when processing structured requests.
Figure 3 illustrates the varying ways user requests may be made and provided as an input to the voice recognition application.
Figure 4 illustrates the grammars associated with the words of the user requests depicted in Figure 3.
Figure 5 illustrates how the grammars from the user requests generalize down to a set of grammars.
Figure 6 illustrates the grammar categories for which each word falls into from the user requests depicted in Figure 3.
Figure 7 illustrates a preferred method and system for managing, creating and editing advertising campaigns and business listings in a location-based services system.
Figure 8 illustrates a preferred method for searching usage information in a location-based services system.
Figure 9 illustrates a preferred advertising effectiveness application for a location-based services system.
Figure 10 illustrates a preferred predictive modeling application for a location-based services system.
Figure 11 illustrates a preferred embodiment of the location-based services system with a system for determining and routing call failures.
Figure 12 illustrates the preferred method steps performed to determine and route call failures in the location-based services system.
Figure 13 illustrates a preferred method of tracking offerings and purchases in the location-based services system.
Figure 14 illustrates a preferred method of completing transactions and storing data about said transactions.
Figure 15 illustrates a preferred advertising effectiveness application.

### Detailed Description of the Presently Preferred Embodiments of the Invention

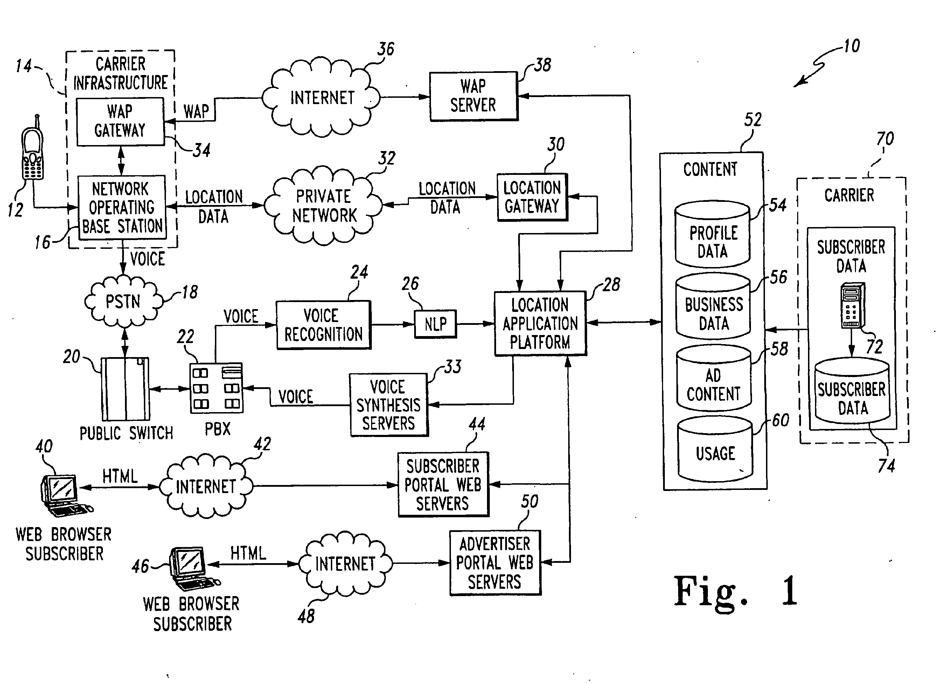

The present invention discloses a method and system for delivering location-based services through a variety of communication networks. Referring to Fig. 1, the preferred location-based services system 10 uses the geographic location of a remote terminal 12 to provide geographically targeted services to the remote terminal 12. Remote terminals 12 that subscribe to the location-based services system 10 are capable of selecting and receiving information from a broad range of business and service providers that are located in a geographic region that is close to the remote terminal 12 and, thus, the user.

As illustrated in Fig. 1, one preferred embodiment of the location-based services system 10 includes a remote terminal 12 that is connected to a wireless communication system 14 using one of several available and commonly used communication protocols. As illustrated, the remote terminal 12 is connected to a base station 16 of the wireless communication system 14, which transmits and receives radio signals to the remote terminal 12 during operation. Those skilled in the art would recognize that although only one base station 16 is illustrated in Fig. 1, several base stations 16 are actually used to make-up the preferred wireless communication system 14. Ideally, the preferred wireless communication system 14 would cover a wide geographic region, such as, by way of example only, the entire United States.

In the preferred embodiment of the present invention, the remote terminal 12 is capable of sending a digital input signal to the base station 16. The term digital input signal should be broadly construed to include voice signals, keypad input data, and pointer device selections or data from any other commonly used means for inputting data into a respective remote terminal 12. Those skilled in the art would recognize that several peripheral devices are available for various types of remote terminals 12 that could be used to input data into the remote terminals 12 and may be taken advantage of by the present invention.

Preferentially, the wireless communication system 14 is a digital communication system that uses one of several different methods of providing wireless digital communication between the remote terminals 12 and the base stations 16. The wireless communication system 14 can use frequency division duplexing (FDD) or time division duplexing (TDD) to allocate for the two directions of transmission between the remote terminal 12 and the base station 16.

In order to provide multiple access methods to the remote terminals 12, which refers to the method of creating multiple channels for each transmission direction, one of several different types of multiple access methods may be used in the present invention. Three preferred types of multiple access methods that might be used include: frequency division multiple access (FDMA); time division multiple access (TDMA); and/or code division multiple access (CDMA). Those skilled in the art would recognize that the present invention could readily be adapted to take advantage of other multiple access methods as well.

As further illustrated in Fig. 1, in the preferred embodiment of the present invention the base station 16 of the wireless communication system 14 is connected to a public switched telephone network (PSTN) 18 by a public switch 20. As known to those skilled in the art, the PSTN 18 is a worldwide voice telephone network that is used to allow various communication devices to communicate with each other. Although the preferred PSTN 18 is a digital system, the present invention may be adapted for use on analog systems as well to accommodate geographic regions that might be underdeveloped or not serviced by a digital system.

The public switch 20 transfers the signals that are received from the base station 16 to a private branch exchange (PBX) 22. The public switch 20 is connected to the private branch exchange (PBX) 22, which, as generally known in the art, is a telephone switching system that is used to interconnect various telephone extensions to each other. In the preferred embodiment of the present invention, the PBX 22 uses all-digital methods for switching and is capable of supporting digital remote terminals and telephones and analog remote terminals and telephones. As set forth in greater detail below, in the preferred embodiment, the PBX 22 is connected to a server of the location-based services system 10, which is a form of a digital remote terminal.

Referring to Fig. 1, in this embodiment of the present invention, the PBX 22 is connected to at least one voice recognition server 24. The voice recognition server 24 contains at least one voice recognition application that is operable to recognize the respective words that are contained in the voice signals that are received from the PBX 22. As set forth in greater detail below, a resulting output is generated by the voice recognition application that is used by a natural language processing application.

The voice recognition server 24 is connected to at least one natural language processing server 26 that includes at least one natural language processing application that processes the identified words contained in the voice signals to ascertain the meaning of the words that are contained in the voice signals. As such, during operation, the voice recognition server 24 identifies or recognizes the particular words that are contained in the voice signals and the natural language processing server 26 interprets the meaning of the recognized words of the voice signals that are originally generated from the remote terminal 12. The natural language processing application may be located on the voice recognition server 24 in other embodiments of the present invention, but, in an effort to increase the level of performance, would preferentially be located on a separate server or a separate set of servers.

The natural language processing server 26 is connected to at least one location-based application server 28. As set forth in detail below, the location-based application server 28 is programmed to provide responsive information to the remote terminals 12 that has been requested by a respective user of the remote terminal 12. Generally speaking, the location-based application server 28 is used to retrieve and pass on location-based information to the remote terminals 12 in various data formats. The type of information provided to the remote terminals 12 varies depending on the specific nature of the information that has been requested from the user and the geographic location of the remote terminal 12.

During operation, after the meaning of the words in the voice signals are interpreted, the natural language processing server 26 is programmed to create a structured request that is sent to the location-based application server 28. In response to the structured request, the location-based application server 28 generates a structured response that is sent to the remote terminal 12. As set forth in greater detail below, the exact nature of the information sent in the structured response depends on the specific request that is made by a particular user of the remote terminal 12.

If an analog voice signal is used, although not illustrated in Fig. 1, at least one digital signal processor server could be used to convert the analog signal into a digital signal that the voice recognition server 24 can process and interpret using the voice recognition applications. In this respective embodiment, the digital signal processor server is preferentially connected between the voice recognition server 24 and the PBX 22. Those skilled in the art would recognize that the voice recognition server 24 might also be designed to perform the functions of the digital signal processor server in other embodiments of the present invention.

Each remote terminal 12 also sends a unique remote terminal identifier to the base station 16 while communicating with the base station 16 of the wireless communication system 14. The remote terminal identifier is preferentially attached to each voice signal as it passes through the location-based services system 10 so that the system can keep track of which respective remote terminal 12 is supposed to receive the information that has been requested. Those skilled in the art would recognize that various identification methods might be used to keep track of specific remote terminals 12 using the location-based services system 10.

As further illustrated in Fig. 1, the location-based application server 28 is also connected to a location gateway server 30, which is, in turn, connected to the base station 16 of the wireless communication system 14. The location gateway server 30 is used by the location-based application server 28 to retrieve a geographic indicator that is associated with each respective remote terminal 12. As such, while a respective remote terminal 12 is connected to the wireless communication system 14, the location-based application server 28 is capable of determining the respective geographic location of the remote terminal 12 so that geographically targeted responses and information can be provided to the remote terminal 12.

As illustrated in Fig. 1, the location gateway server 30 is preferentially connected to the base station 16 of the wireless communication system 14 using a network connection 32, which may be a private network connection or an Internet connection in alternative embodiments of the present invention. The geographic indicator may be generated by the remote terminal 12 or the base station 16 and is preferentially transmitted to the location-based application server 28 when a user of the remote terminal 12 is accessing the location-based services system 10. The geographic indicator is preferentially transmitted to the location-based application server 28 with the remote terminal identifier so that the location-based application server 28 can associate each respective remote terminal 12 with a particular geographic location.

In the preferred embodiment of the present invention, the geographic indicator may be preset by a user of the remote terminal 12, automatically generated by a GPS located in the remote terminal 12 or generated by a specialized geographic determination application running on the base station 16. In addition, the present invention may advantageously take advantage of an enhanced 911 system of the wireless communication system 14 to generate the geographic indicator. In another embodiment of this invention, the geographic indicator may originate from a combination of these sources and/or systems (i.e. it could come from a GPS-assisted network that uses GPS and devices on the network). The geographic indicator may automatically be sent to the location-based application server 28 as soon as a respective remote terminal 12 connects to the wireless communication system 14; however, in alternative embodiments of the present invention, the geographic indicator is only sent when a respective remote terminal is sending a structured request to the location-based application server 28. As the geographic location of the remote terminal 12 changes, the geographic indicator is updated and the updated information can continuously be sent to the location-based application server 28.

As further illustrated in Fig. 1, at least one voice synthesis server 33 is connected to the location-based application server 28 and the PBX 22. For voice-related applications of the location-based services system 10, the voice synthesis server 33 is used to generate voice responses that are based on the structured responses that are generated in response to the structure requests that are received by the location-based application server 28. Voice synthesis applications on the voice synthesis server 33 are used to transform the structured responses into voice response. In the preferred embodiment, the PBX 22 is used to transmit the voice responses to the PSTN 18, which, in turn, transmits the voice response to the base station 16, which ultimately transmits the voice response on to the remote terminal 12. In alternative embodiments of the present invention, the voice synthesis server 33 may be connected directly to respective base stations 16 of the wireless communication system 14.

Referring once again to Fig. 1, in yet another preferred embodiment of the present invention, the remote terminal 12 is connected to the location-based application server 28 through a wireless application protocol (WAP) gateway 34 of the wireless communication system 14. The WAP gateway 34 is connected to a WAP server 38 of the location-based services system 10 through a network connection 36. The network connection 36 may be a private network connection or an Internet connection. The WAP server 38 is connected to the location-based application server 28 and, during operation, is used to generate structured requests, which are based on requests that are input to the remote terminal 12 and sent to the location-based application server 28.

The remote terminal 12 is capable of communicating with the WAP server 38 and the location-based application server 28 using a WAP standard. As known to those skilled in the art, the WAP standard is a protocol that is designed for wireless communication devices to provide secure access to e-mail and text-based web pages. WAP provides a complete environment for wireless applications that includes a wireless counterpart of TCP/IP and a framework for telephony integration. In the preferred embodiment of the location-based services system 10, the remote terminals 12 may also be capable of browsing for location-based services through the use of text and graphical based menus that can be provided to the remote terminals 12 from the location-based application server 28.

One preferred embodiment of the present invention uses the WAP standard to support the use of a Wireless Markup Language (WML), which is a streamlined version of HTML for small screen displays, to conduct communication and transfer information between the remote terminal 12 and the location-based application server 28. WAP is also capable of using WMLScript, which is a compact JavaScript-like language that is capable of running in limited memory on the remote terminal 12. The location-based services system 10 can also be designed to advantageously take advantage of this capability to provide location-based services to users of remote terminals 12 depending the particular geographic location of the remote terminal 12.

In this preferred embodiment of the present invention, the WAP standard supports various handheld input methods such as keypad inputs or pointer device inputs that may be generated on various different types of remote terminals 12. As it relates to the present invention, this gives users of the remote terminals 12 the capability of inputting data from keypads for the purposes of entering search requests to the location-based services system 10. In addition, the remote terminals 12 are capable of receiving, interpreting and displaying web pages that include hypertext links to other web pages that may be selected using various selection methods.

For the purpose of the present invention, the term wireless application protocol should be broadly construed to include any communication protocol similar to what is commonly referred to as the "WAP standard," which, as set forth above, is used to transmit text and graphics-based information to remote terminals 12. Although the WAP standard is used in this particular preferred embodiment of the present invention, those skilled in the art should recognize that other text and graphics-based communication protocols could be used in alternative embodiments of the present invention.

For example, although not specifically illustrated, another preferred embodiment of the present invention could be designed for an i-Mode wireless communication system. i-Mode wireless communication systems use a packet-based communication protocol to communicate between the remote terminals 12 and the base station 16, which essentially means that the remote terminals 12 are connected to the wireless communication system at all times and communicate with the base stations 16 using packets. i-Mode is also capable of providing web-browsing and customized applications to remote terminals 12.

i-Mode is a proprietary system that uses a subset of HTML, known as cHTML, in contrast to the WAP standard, which uses WML. In this particular embodiment, an i-Mode server is used to connect the base station 16 of the wireless communication system 14 to the location-based application server 28. The remaining details of this particular embodiment are similar to other embodiments of the present invention and, as such, a more detailed discussion is not necessary.

Referring to Fig. 1, in yet another preferred embodiment of the location-based services system 10, a second remote terminal 40 is connected to a subscriber portal web server 44 through a network connection 42. The network connection 42 may be a private network connection or an Internet connection. As illustrated, the subscriber portal web server 44 is also connected to the location-based application server 28. During operation, the second remote terminal 40 is programmed to receive structured requests that are sent to the location-based application server 28 and, likewise, the location-based application server 28 is programmed to generate structured responses that are sent to the second remote terminal 40.

The second remote terminal 40 and the location-based application server 28 preferentially communicate with each other using standard web-based protocols that are commonly used in various Internet-based applications. In this embodiment of the present invention, a user accesses the subscriber portal web server 44 through the second remote terminal 40, which is preferentially a computer workstation. As a subscriber to the location-based services system 10, the second remote terminal 40 is assigned a predetermined geographic indicator. The geographic indicator is used by the location-based application server 28 to target services and business content to the second remote terminal 40 that are based on the geographic location of the second remote terminal 40.

The user of the second remote terminal 40 may be given the option of setting the geographic indicator to a desired geographic location, which may or may not be the exact geographic location of the second remote terminal 40. For example, if the user is traveling to another city that evening and wants to access location-based services in that particular city, an option can be provided allowing the second remote terminal 40 to designate that particular city.

In this preferred embodiment of the present invention, the second remote terminal 40 is preferentially a computer workstation that includes multimedia capabilities and includes a microphone and a sound card. As known to those skilled in the art, this allows the second remote terminal 40 to generate sound through a speaker system and receive voice signals through the microphone. Although not specifically illustrated in Fig. 1, this could allow the subscriber portal web server 44 to be connected to the voice recognition server 24 so that voice signals sent from the second remote terminal 40 could be processed similar to the method used to process voice signals received from wireless remote terminal 12.

Referring to Fig. 1, a business remote terminal 46 is connected to a network connection 48 that is connected to an advertiser portal web server 50. The network connection 48 may be a private network connection or an Internet connection. The advertiser portal web server 50 allows various businesses (i.e., content providers) to add, modify and/or delete campaigns that are designed to promote and sell various products and services through the location-based services system 10. For example, if a particular business entity desires to run a promotion on a particular product or service, the advertiser portal web server 50 allows the business entity to modify their respective listings to include the respective items or services on special.

As further illustrated in Fig. 1, the preferred location-based services system 10 is also capable of leveraging data that is preferentially grouped in four logical data groupings 52. These logical data groupings include profile data files 54, business data files 56, additional data files 58 and usage data files 60. The data files 54-60 contain detailed information on various items and services that are used by the location-based services system 10, which is set forth in detail below. The data files 54-60 can be located on the location-based application server 28, but are preferentially maintained on separate servers.

The profile data files 54 contain a group of logical entities that contain relevant information concerning each consumer of the location-based services system 10. These logical entities include, but are not specifically limited to the following items: consumer name; consumer phone number; consumer identification; consumer password; consumer home address; consumer home phone number; consumer email address; consumer pager number; consumer service subscriptions (detailing the consumers chosen level of participation in one or more services); consumer privacy preferences (detailing information denoting the willingness to share a consumers private data with others based on data type, requestor, service, etc.); consumer service preferences (detailing any specific saved information that is relevant to any of the services which a consumer may use, such as: named locations (such as the address for a consumers work location, or the address(es) of a consumers friend(s); named interests or preferences regarding hobbies, news topic interest, sports, music, preferred brands or chains, banking information and other demographic information. (such as NBA basketball, Jazz music, Italian food, favorite clothing brands or chains, banking information, etc.)); and preferred asynchronous communication method (such as email or pager) listed by service and/or service/content provider.

The business data files 56 are composed of a group of logical entities containing all relevant information regarding the businesses listed within the location-based services system 10, including but not limited to: business name; business phone number; business text description; business audio description; business video description; business and/or product images; business identification; business password; business category or categories; advertising participation level; advertising campaign information such as: parameters that define target market; campaign identification code; advertising content and special deals/discounts; saved data mining/reporting parameters; brands sold; brands serviced; product types sold; product types serviced; product models sold; product models serviced; product model prices; and service prices and inventory list (by brand, product type and product model).

The additional data files 58 contains a group of logical entities that generally includes any additional content that is capable of being leveraged by the location-based services system 10, possibly including, but not limited to: business ratings (via external evaluation services); weather conditions; driving directions; maps; traffic Although not specifically illustrated, the residential telephone number and address listings may be provided by local telephone companies through a residential listing server that is connected to the location-based application server 28.

The usage data files 60 contains a group of logical entities that generally includes all recorded information regarding consumer transactions from remote terminals 12, 40, possibly including, but not limited to: consumer identification (or a unique hash of consumer identification); date; time; service used; request type; search criteria; matched data purchases made, and actions taken. Those skilled in the art would recognize that several other types of usage data might be stored in the usage data files 60.

As generally set forth above, users of the location-based services system 10 are given the ability to search, via a remote terminal 12, 40, for a business that will satisfy specific purchase or service requirements using multiple access methods (voice, wireless application protocol or web application protocol). The location-based application server 28 is programmed to handle a variety of structured requests and is capable of generating a variety of structured responses in the same format (i.e. - voice, wireless application protocol or web application protocol) that the structured request was received by the location-based application server 28.

Some of the structured request parameters that are capable of being used for the business services provided by the location-based services system 10 include (but are not necessarily limited to) one or more of the following: product type; service type; business name; business category; product name (or model name); product brand; price level; business or service ratings (i.e. external evaluation from a rating service such as AAA); whether special deals are provided; location (auto-location (locating nearest ATM for instance), predefined locations, or consumer-specified locations); hours of operation; availability of service (for example: availability of a open table at a specified time at a restaurant); and company specified within favorites for a category (i.e., name of favorite coffee house franchise). Those skilled in the art would recognize that a variety of structured request parameters might be used in the present invention.

Optionally, consumers have the ability to "opt-in" to "push" content and advertising services. Push services are defined as services, which proactively deliver content to the consumer through the remote terminal 12, 40, rather than services delivered only following a request by the consumer. As set forth above, the preferences of the consumers that use the remote terminals 12 are stored within the profile data files 54. As such, by way of example only, a consumer that likes golf may be "pushed" an offering as they travel close to a nearby golf equipment store relating to a special offer on an item such as a golf club or particular brand of golf ball.

As set forth briefly above, the location-based services system 10 also gives businesses the ability to manage their respective content and mine usage data by using the advertiser portal web server 50. The advertiser portal web server 50 preferentially includes the following web-based applications: a campaign management application, a business profile management application, a mining/reporting and predictive modeling application. Each of these applications and their respective functional aspects is discussed in greater detail below.

The campaign management application includes several applications that allow a business to create advertising campaigns and an edit/delete advertising campaigns. The create campaign capability enables an advertiser to create a location-based advertising campaign. As part of this capability, the business would define the market segment at which the advertising is targeted. Then, the advertiser would define the advertising content that would be delivered to the target market, as well as the mechanism of delivery (i.e. pushed to each consumers remote terminal 12, 40, or presented only to a consumer when they make a relevant enhanced directory assistance request/search). The edit/delete campaign capability allows the business to modify or delete an existing campaign that has already been created and is running on the location-based application server 28.

The business profile management application includes a create business listing capability and an edit business listing capability. The create business listing capability enables a business to define their respective set of business data (see above for a list of content within the business data). The edit business listing capability allows the business to modify or delete their business listing. Those skilled in the art would recognize that several other options might be made available through the business profile management application.

The mining/reporting capability allows business to interface with data that is stored in the usage data files 60. An advertising effectiveness interface utilizes the usage data files 60 and business data files 56 to generate analysis surrounding the effectiveness of location-based advertising campaigns. The analysis will address questions such as "How many people received my campaign in the downtown area of Atlanta". The information provided to the businesses provides them insight to quantify the results of campaigns created in the location-based services system 10 through the campaign management tool.

The predictive modeling capability provides forecasting for potential customers likely to respond to offers, listings and deals. Examples of the type of feedback the consumer will receive include (but not limited to) the following: identifying customers likely to respond to their campaign by customer segment; identifying customers likely to request a campaign or listing by customer segment; and identifying demands by peak time or day.

As briefly set forth above, the location-based services system 10 provides a consumer using a remote terminal 12, 40 with access to products and services in a designated geographic area through multiple access methods such as voice, wireless application protocols (such as WAP and cHTML) and web protocols (such as Java and HTML). The present invention encompasses the full lifecycle of the location-based services system 10 including delivery and maintenance, which includes content management, consumer management, content delivery, advertising management, advertising reporting, advertising delivery, usage tracking, usage mining and reporting, billing and settlements.

The preferred location-based services system 10 is capable of providing location-based services to consumers through remote terminals 12, 40 and is managed by various content providers through the use of respective business remote terminals 46. The services that are provided through the location-based services system 10 preferentially includes an enhanced directory assistance service and an enhanced business service that is delivered through a voice recognition capability, wireless application protocol capability and/or web application capability.

In order to access the enhanced directory assistance services or the business services, the user of the remote terminal 12 preferentially enters a predetermined key sequence (e.g. - by pressing 411) on the keypad of the remote terminal 12 or by pressing a specially designed key on the remote terminal 12. If the remote terminal is not connected to the base station 16 already, when the enhanced directory assistance services or business services are selected, the remote terminal 12 establishes a connection with the base station 16 of the wireless communication system 14, which acts as a gateway to the location-based services system 10.

In another embodiment, in order to select one of the respective services, the user of the remote terminal 12 is given the option of using voice commands, but as previously set forth may also use keypad inputs on the remote terminal 12 to select the desired services as well. Those skilled in the art should recognize that the enhanced directory assistance services and the business services do not necessarily have to be provided through the same access method and that a keypad-based menu system may be used until the appropriate time occurs for the user to input a voice signal containing a request for information.

By way of example only, if the enhanced directory assistance services are selected by a user of the remote terminal 12, either the base station 16, the location-based application server 28 or remote terminal 12 can be programmed to generate a search parameter request that is audibly generated on the remote terminal 12. In the embodiment being discussed, the search parameter request is sent in the form of a voice signal that prompts the user to state the first and last name of the person they are looking for. In addition, the search parameter request could also include an option that might prompt to user to also state the geographic area where the person is located. As should be apparent from the discussion above, since the location-based services system 10 includes voice recognition applications, those skilled in the art should recognize that the entire process of entering the search parameter request may be done by voice signals generated on the remote terminals 12.

In response to the search parameter request that is generated on the remote terminal 12, the user preferentially provides a vocal response to the remote terminal that is transmitted to the base station 16. The vocal response preferentially includes a first name response and a last name response (and possibly a detailed geographic information response for non-local listings) of the particular person the user is looking to retrieve information on. The vocal response to the search parameter request, which preferentially also includes a unique remote terminal identifier that is associated with each respective remote terminal 12, is then sent from the remote terminal 12 to the base station 16. The base station 16 transmits the voice response to the PSTN 18, which then routes the vocal response, together with the remote terminal identifier, to the PBX 22.

The PBX 22 transmits the vocal response and the remote terminal identifier as inputs to voice recognition applications and natural language processing applications that are located on servers 24, 26, which in turn, respectively transform the vocal response and the remote terminal identifier into a structured residential listing request that is sent to the location-based application server 28. As set forth in detail above, the voice recognition applications analyze the vocal responses for the purposes of making a determination of the identity of particular words contained in the vocal responses. Any detailed geographic information provided by the user is also added to the structured residential listing request that is sent to the location-based application server 28.

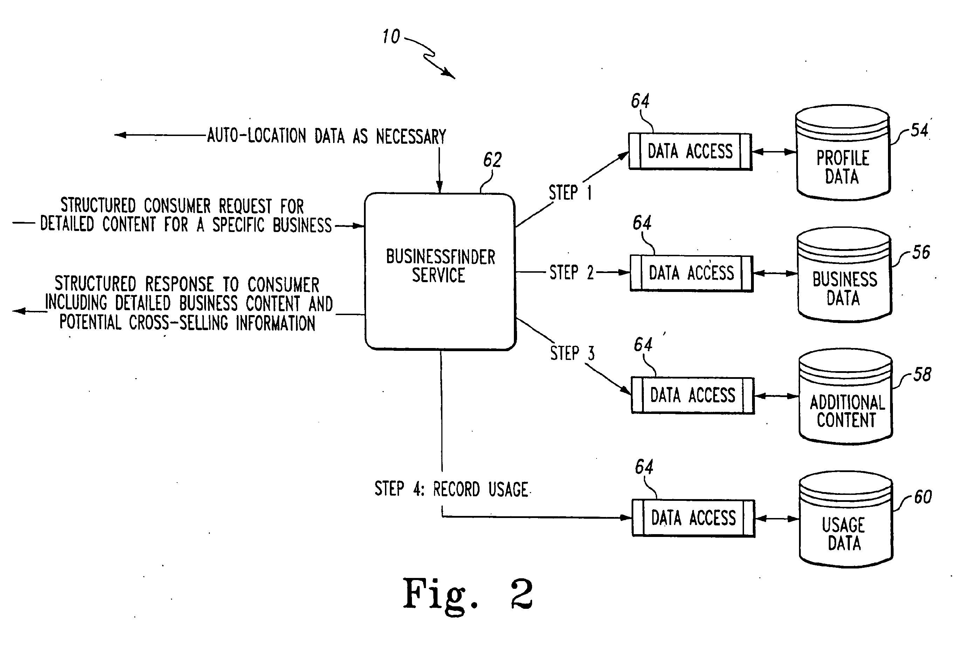

As illustrated in Fig. 2, the structured residential listing request is used as an input to a residential finder application 62 located on the location-based application server 28. During operation, the residential finder application 62 interprets the structured residential listing request and uses at least one data access routine 64 to locate and retrieve the specific information requested by the structure residential listing request from a respective database file 54-58. Those skilled in the art should recognize that several database servers may be connected to the location-based application server 28 that are used to store various forms of information and content that is provided to users by the location-based services system 10 in varying types of formats, which will be set forth in greater detail below.

In the preferred embodiment of the present invention, the residential finder application 62 matches up the structured residential listing request with the geographic indicator of the remote terminal 12. If no geographic information is contained in the structured response, the residential finder application 62 conducts a search of the profile data files 54 and the additional data files 58 with data access routines 64 targeted within a predetermined area based on the geographic location of remote terminal 12. If geographic information is included in the vocal response, the residential finder application 62 conducts a search within the geographic area specified by the user. As set forth above, in the preferred embodiment of the present invention the residential listing database files are stored under the additional data files 58 by way of example only and should not be construed as a limitation of the present invention.

The residential finder application 62 preferentially also searches the profile data files 54 so that if the identity of the person contained in the structured residential request is identified as a subscriber of the location-based services system 10, a remote terminal 12 telephone number and/or an email address may also be added to the response that is provided to the user requesting the desired information. If the located person does turn out to be a subscriber of the location-based services system 10, other embodiments of the present invention allow the subscriber to create a personalized response that is stored in a database file and is provided in response to residential listing requests that identify them.

In addition to receiving the structured residential listing requests, the residential finder application 62 obtains a geographic indicator and a remote terminal identifier associated with the remote terminal 12. This allows the system to default to the geographic location of the remote terminal 12 to conduct the search, as set forth above. For instance, if the remote terminal 12 is located in Atlanta, Georgia, the residential finder application 62 will know this from the geographic indicator and will only search listings in the Atlanta area.

Once the appropriate data is located by the residential finder application 62 that is responsive to the structured residential listing request, which in the present example would preferentially include at least one telephone number and/or the address of the person(s) named in the voice signal, the residential finder application 62 is operable to generate a structured residential response that is sent to voice synthesis server 33. As set forth in detail above, the voice synthesis server 33 is programmed to transform the structured residential response into a voice response signal with voice synthesis applications located on the voice synthesis server 33.

As set forth briefly above, the voice response that are generated by the voice synthesis server 33 can include the name, address, residential telephone number, mobile number and/or email address of the particular person for which the user has requested a residential listing. For those instances where the structured residential responses include more than one residential listing, the residential listing finder application 62 is preferentially programmed to generate a structured residential response that provides the multiple listing results in a predetermined organized listing arrangement.

The predetermined organized listing arrangement is preferentially set up so that the user of the remote terminal 12 is capable of interacting with the listings provided in the voice response through the use of a keypad input or by voice signals that are spoken into the remote terminal 12 by the user. Preferentially, the information is organized and presented to the user of the remote terminal 12 based on the address of the particular people identified by the residential finder application 62, however, those skilled in the art would recognize that other alternatives of presenting and organizing the results exist (i.e. - ranking the results in geographic order) are capable of being used in varying embodiments of the present invention.

If the person for whom information has been requested is designated as being unlisted or unavailable, the location-based application server 28 is preferentially programmed to generate a structured residential response that contains a message that indicates that the requested information is unlisted or unavailable. As such, in this particular embodiment of the present invention the location-based application server 28 sends the structured residential response to the voice synthesis server 33, which generates a voice signal that is sent to the remote terminal 12 informing the user that requested the residential listing that the requested residential listing it unlisted or unavailable.

As briefly set forth above, another preferred embodiment of the location-based services system 10 is capable of providing business services to the remote terminal 12, which are provided to the remote terminal 12 based on the geographic location of the remote terminal 12. If the user of the remote terminal 12 selects the business services option instead of the enhanced directory assistance services option, a variety of information services are capable of being delivered to the user through the location-based services system 10. During operation, the business services are provided to the remote terminal 12 through similar access methods that the residential listing services are provided to the remote terminal 12. In addition to being able to obtain the address and telephone number of local businesses, various other forms of business information is capable of being transmitted to the remote terminal 12 by the location-based services system 10.

As generally set forth above and in greater detail below, some of the preferred structured business request parameters that are capable of being processed by the business services of the location-based services system 10 include (but are not necessarily limited to) one or more of the following parameters: product/service types; business names; business category; product name (or model name); product brands; price level; business or service ratings (e.g.- external evaluation from a rating service such as AAA); whether special deals or offers are being provided; auto-location of predefined services (e.g. - locating the nearest ATM for instance); hours of operation; availability of service (e.g. - availability of a open table at a specified time at a restaurant); and/or business information specified within a user defined favorites category (e.g. - name of favorite coffee house franchise, favorite clothing brands, favorite restaurants).

In this preferred embodiment of the present invention, once a user of the remote terminal 12 gains access to the business services provided by the location-based services system 10, they are prompted by a voice signal requesting the user to state their respective business request. In response to the prompt for a business request, the user states a vocal response that is received by the remote terminal 12 that contains a predetermined request for a predetermined type of business content. The exact nature and content of the vocal response will vary, depending on the specific type of business/service information that is being requested by the user of the remote terminal 12. As set forth above and below, the preferred embodiment of the present invention includes natural language processing applications the are used to interpret the meaning and context of the words contained in the vocal response, thereby allowing the user of the remote terminal 12 to make a request using requests that are spoken using statements commonly used in everyday conversations.

By way of example only, let's say that a respective user of the remote terminal 12 wants to obtain business information related to determining the location of a favorite local fast-food restaurant. As such, the user's vocal response that is received by the remote terminal 12 might contain a voice signal that includes a request for business information that could be phrased something along the lines of the following statement: "What is the address of a Burger King restaurant that is close to my present location?" As previously set forth, this preferred embodiment of the present invention is capable of interpreting this request using natural language processing applications to generate a structured response.

As with the residential services, in this embodiment of the present invention the vocal response that is provided by the user of the remote terminal 12 is transmitted from the remote terminal 12 to the base station 16 of the wireless communication system 14, which in turn is operable to transmit the vocal response to the PSTN 18 that transmits the vocal response to the PBX 22. The vocal response is then sent from the PBX 22 to the voice recognition server 24 where it is processed with voice recognition applications to determine the identity or recognize the respective words that are contained in the vocal response from the user containing a business information request. Although not illustrated, in an alternative embodiment of the present invention the base station 16 is directly connected to the voice recognition server 24, thereby allowing the base station 16 to directly transmit vocal response to the voice recognition server 24.

After the words contained in the vocal response have been recognized using voice recognition applications, a respective output is generated by the voice recognition applications, which is used as an input to natural language processing applications. As set forth in detail above, the natural language processing applications determine the meaning and context of the words contained in the vocal response that is received by the remote terminal 12. Referring once again to Fig. 2, once the meaning and context of the recognized words contained in the vocal response have been determined, the natural language application is programmed to generate a structured business request that is sent to the location-based application server 28. The location-based application server 28 includes at least one business/services finder application 62 that is operable to process the structured business request by retrieving the requested information.

As set forth in detail above, the remote terminal 12 also sends a remote terminal identifier with the vocal response that is preferentially integrated in some manner with the structured business request that is ultimately generated and sent to the location-based application server 28. In addition, in this preferred embodiment of the present invention as well as others, a geographic indicator and a remote terminal identifier associated with the respective remote terminal 12 making the structured business request is also obtained or has already been obtained by the location-based application server 28. As illustrated in Fig. 2, the geographic indicator and the structured business request are used by the business/services finder application 62 to generate a structured business response that is responsive to the structured business request.

In our current example, the preferred business/services finder application 62 uses the geographic indicator of the remote terminal 12 to determine which particular Burger King location is closest to remote terminal 12. A mapping routine within the business/services finder application 62 compares the geographic location of the remote terminal 12 with the respective geographic locations of Burger King restaurants retrieved by the structured business request and makes the determination of which location is closest to the remote terminal 12, which can be based on the distance of the remote terminal 12 from each respective location. As illustrated in Fig. 2, this is accomplished by a data access routine 64 that accesses the appropriate information from the business data files 56, which preferentially contains a database of business listings, addresses, products and/or services provided.

After the appropriate information is located, the location-based application server 28 is programmed to generate a structured business response that is sent to the voice synthesis server 33. The voice synthesis server 33 converts the structured business response into a voice signal that is then sent to remote terminal 12. In this example, the structured business response would contain the address of the Burger King that is closest to remote terminal 12, which has been determined by the location-based application server 28 based on the geographic location of remote terminal 12.

In yet another example of this embodiment of the present invention, a user of the business services might request information on a retail store that sells a specific product or provides a specific service. For instance, a user might state: "Who sells or provides product/service (stating the particular product/service desired)?" After the voice recognition application and the natural language processing application interpret and transform the request into a structured business request, the business/services finder application 62 uses the geographic indicator of remote terminal 12 to narrow the structured business request to retrieve business information contained within a predefined geographic area in which the remote terminal 12 is located. If more than one business sells the item or provides the requested service, the business/services finder application 62 is programmed to generate a structured business response that is sent to voice synthesis server 33 containing a listing of the respective businesses meeting the desired criteria.

In yet another preferred embodiment of the present invention, the user is able to access the location-based services system 10 by using a wireless application protocol to generate and transmit structured requests to the location-based application server 28. A user of remote terminal 12 uses a keypad or some other equivalent input means to access the location-based services system 10 from a selection menu that is generated on a display of remote terminal 12. In this preferred embodiment of the present invention, once a user chooses to obtain access to the location-based services system 10, the remote terminal 12 is preferentially programmed to display a selection menu that contains a link to the business services and residential listing services provided by the location-based services system 10. Those skilled in the art would recognize that various predefined links and menu selections for various types of services may also be displayed that may or may not be specified by the user of remote terminal 12.

If the residential listing service is selected on the remote terminal 12, the user is prompted by remote terminal 12 to enter the first and last name of the person for which they desire to obtain information. By default, the remote terminal 12 is preferentially programmed to search for a listing that is contained in the immediate geographic location of the remote terminal 12. For example, if remote terminal 12 is located in the Atlanta metropolitan area, the search will be preset to be conducted using the Atlanta residential listings database. In alternative embodiments of the present invention, an additional input area is provided on the display of the remote terminal 12 whereby the user may designate the particular geographic location to search (i.e. - a city and state input location). As apparent, this allows the user to vary the location searched based on user preferences thereby providing further benefits to the user.

An additional item the remote terminal 12 is programmed to generate on the display is an icon or a selection area that is designated to cause the remote terminal 12 to transmit the search request, which contain the parameters that have been input by the user, to the base station 16 of the wireless communication system 14. As previously set forth, preferentially the search request is sent to the base station 16 using a wireless application protocol, which for the purpose of the present invention should be broadly construed to include a broad range of standards used by various wireless communication systems 14. The remote terminal 12 also transmits a remote terminal identifier with the search request, which as previously set forth, is assigned to remote terminals 12 for identification purposes. Once received by the base station 16, the search request is directed to the WAP gateway 34, which in turn, is preferentially programmed to transmit all search requests that are received by users accessing the location-based services system 10 to the WAP server 38.

The WAP server 38 is programmed to interpret the search request and generate a structured residential request that is sent to the location-based application server 28. For identification purposes, the remote terminal identifier is also transmitted to the location-based application server 28 with the structured residential request. As with other embodiments of the present invention, the location-based application server 28 is programmed with a residential finder application 62 that uses one of several data access routines 64 to obtain the requested information from a respective database file 54-58. A structured response is then sent to the WAP server 38, which in turn transmits the structured response to the WAP gateway 34 and ultimately on to the remote terminal 12.

If the business services option is selected, the remote terminal 12 prompts the user for a search request, which the user enters on the remote terminal 12. The search request is then sent to the location-based application server 28, in a similar fashion as described with the directory assistance services, where it is processed by a business/services finder application 62. The business/services finder application 62 uses data access routines 64 to retrieve the desired information and generates a structured response that is based on the geographic location of the remote terminal 12.

For example, if the remote terminal 12 is located on the upper north side of Atlanta, Georgia, the location-based application server 28 will be informed of this fact by receiving a geographic indicator from the second remote terminal 12 and will be operable to generate structured responses to structured requests that contain information that is targeted for that particular geographic location. For instance, if a user of the remote terminal 12 enters a search request for information on "Chinese restaurants running specials", a structured response is generated by the business/services finder application 62 that provides information about Chinese restaurants on the upper north side of Atlanta, and not Chinese restaurants located in irrelevant geographic locations, such as the far south side of Atlanta.

As previously set forth, in yet another preferred embodiment of the location-based services system 10 a user of the second remote terminal 40 is connected to a subscriber web portal server 44. The second remote terminal 40 and the subscriber web portal server 44 are designed to communicate with each other using standard web-based protocols (e.g. - HTML). The subscriber web portal server 44 is connected to the location-based application server 28, thereby providing the second remote terminal 40 with access to the business services and enhanced directory assistance services that are offered in the preferred embodiments of the present invention.

The second remote terminal 40 is capable of providing voice or keypad input data to the subscriber web portal server 44. As previously set forth, for voice signals the respective vocal responses are sent to the voice recognition servers 24 for processing and, in the case of keypad input data, the subscriber portal web server 44 is operable to generate structured requests in response to user requests received from the second remote terminal 40 in similar manners as set forth above. The preferred location-based services system 10 is capable of allowing its subscribers to take advantage of the services provided by the present invention in a non-wireless environment as well, by supporting the use of standard computing devices that are typically used at home or work.

As such, by way of example only, let's say a user of the second remote terminal 40 is located in Atlanta, Georgia, and wants to find local deals on Polo merchandise as well as stores that carry this particular brand that are located near their respective geographic location. In the case of a keypad input search, the user would be prompted for a search request from a web page generated on the second remote terminal 40 where they would enter their desired search parameters, which in the present example might be in the form of the words "POLO MERCHANDISE".

After the search request is entered and the user is ready to send the request, there is also preferentially an icon or some other type of selection indicator that is generated on a web page being displayed on the second remote terminal 40 that allows the user to submit the request. Once this is selected, the search request, a second remote terminal identifier and a geographic indicator are sent to the subscriber web portal server 44. The subscriber web portal server 44 then transforms the search request into a structured search request that is sent to the location-based application server 28, which processes the structured request similar to other embodiments of the present invention.

In the case of a voice signal input being used, the user would be prompted to state their respective request much like in the example set forth above with relation to wireless remote terminal 12. As such, in the case of our present example, the user would state "POLO MERCHANDISE" after being prompted for a business services request. This vocal response is sent to the voice recognition server 24, which as previously set forth, processes the vocal response similar to other embodiments herein described.

As such, in our present example, a user of the second remote terminal 40 would be provided with a structured response from the location-based application server 28 that contained information relating to businesses that sell Polo merchandise in a geographic location that is relatively close to the second remote terminal 40. In fact, in every embodiment of the present invention, the user may also be given option of selecting a predetermined geographic radius for which they wish responses to be generated during operation. By way of example only, a respective user may only desire to obtain information on businesses located within 15 miles of the remote terminals 12, 40 and as such, may set a setting provided on the remote terminal 12, 40 that only allows responses to business services requests to be generated within a 15 mile radius of the remote terminal 12, 40.

Referring once again to Fig. 1, a wireless carrier 70 may also be connected to the data files 54-60 through a wireless carrier server 72. The wireless carrier server 72 is preferentially operable to monitor the data that is contained in the data files 54-60. As such, during operation of the location-based services system 10 the wireless carrier server 72 can update a subscriber data file 74 as users of the remote terminals 12, 40 access the location-based services system 10. This allows the wireless carrier 70 to keep track of the usage of the location-based services system 10 and may allow various charges to be applied to the user if applicable.

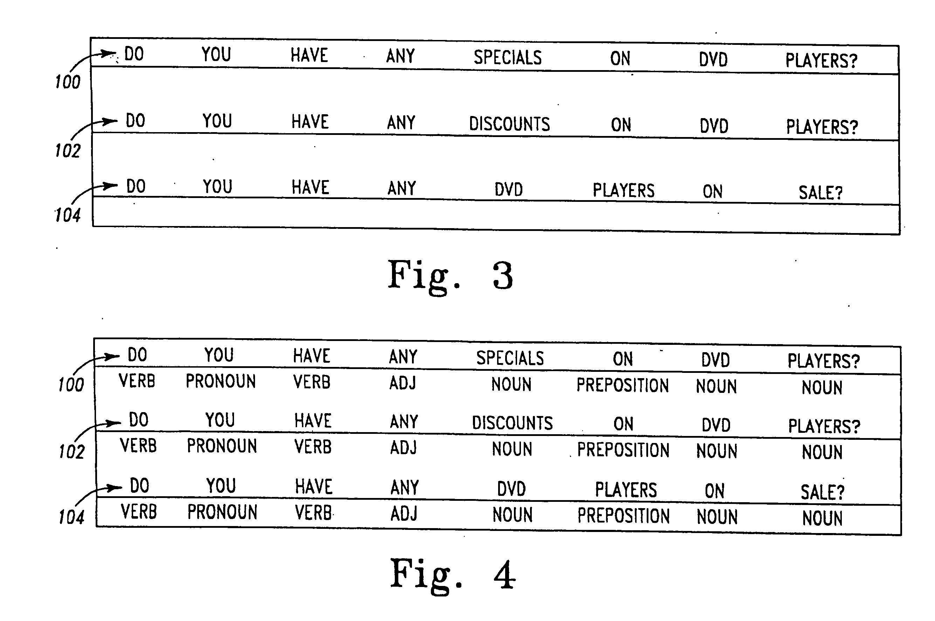

Referring to Figs. 1 and 3, yet another preferred embodiment of the present invention discloses a method and system for providing enhanced natural language processing in a location-based services system 10. One embodiment of this invention enhances natural language processing by building and leveraging a grammar database that is organized based on parts of speech and intended purpose. This embodiment of the present invention provides a natural language processing application that is located on the natural language processing servers 26 that allows users of the remote terminals 12 to request information in many natural ways, without requiring the significant setup and maintenance that is required in menu-driven implementations. In the present preferred embodiment, altering the mechanism and structures of the grammars that are typically defined in a voice recognition system enables this capability.

As illustrated in Fig. 3, several different methods are set forth for verbally requesting if there are any specials or discounts on a digital video disc (DVD) player. Those skilled in the art should recognize that the requests set forth in Fig. 3 are intended to serve as an example only and that several other types of product or service requests may be made by consumers. As such, the various requests for specials or discounts on DVD players set forth in Fig. 3 should be viewed in an illustrative sense and by no means should be construed as a limitation of the present invention. The preferred embodiment of the present invention is designed to handle any type of consumer request for products or services.

The first voice request 100 illustrated in Fig. 3 is set forth as "Do you have any specials on DVD players?" The second voice request 102 is set forth as "Do you have any discounts on DVD players?" The third voice request 104 is set forth as "Do you have any DVD players on sale?" While these three requests 100-104 are somewhat different, they represent some of the varying methods for which a consumer would use natural language to ask a human salesperson in a store or over the telephone for specials on DVD players or any other type of product or service. As set forth in detail below, the present invention discloses a natural language processing application that is designed to handle the varying ways in which consumers request information, so that users of remote terminals 12 can use natural language when requesting information on products or services while using the location-based services system 10.

Each of the requests 100-104 in Fig. 3 has a particular word structure that is associated with the request 100-104, which can be referred to as a part of speech or a grammar. Parts of speech refer to how words are classified according to their particular function in sentences for the purpose of grammatical analysis. In the preferred embodiment of the present invention, during operation, the natural language processing application that is located on the natural language processing server 26 divides each spoken request into one of eight parts of speech or grammars. The eight parts of speech or grammars into which each verbal request is preferentially broken down include: nouns, adjectives, adverbs, prepositions, conjunctions, pronouns, verbs and interjections. Most major languages use the above-referenced eight parts of speech or grammars and, as such, the present natural language processing application is versatile for application in almost any spoken language. For the purpose of the present invention, it is worthwhile to note the function of these grammars and how they are used by the natural language processing application.

A noun is a word that is usually used to denote a thing, place, person, quality, or action. In a sentence, a noun is the subject or object of action expressed by a verb or as the object of a preposition. In some languages, nouns and verbs can sometimes take the same form. In the present preferred embodiment, the natural language processing application uses the identified nouns from verbal requests 100-104 to determine the thing or object that a user of the remote terminal 12 is requesting. As such, referring to Fig. 4, in our present example, the terms specials, DVD, players, discounts and sale are viewed by the natural language processing application as the nouns of the requests 100-104. During operation, the preferred location-based services 10 will use these terms to locate the product being requested by a user of the remote terminal 12.

An adjective is a part of speech that modifies, or qualifies, a noun or pronoun, in one of three forms of comparative degree. The three forms of comparative degree an adjective can modify or qualify a noun or pronoun are: positive (e.g., cheap), comparative (e.g., cheaper), or superlative (e.g., cheapest). The natural language processing application will generally use the adjectives contained in the verbal requests 100-104 to generate structured requests that narrow the search that is conducted for a particular product or service. For example, if a request for "the cheapest DVD player" is received, the preferred embodiment will exclude high-priced or top-of-the-line DVD players from the structured responses that are provided to a user of the remote terminal.

An adverb is a part of speech that modifies a verb (purchase *inexpensively),* an adjective (a *very* cheap DVD player), or another adverb (purchase *very inexpensively).* Adverbs may indicate place or direction (where, whence), time (still, immediately), degree (very, inexpensive), manner (thus, and words ending in ly, such as locally), and belief or doubt (perhaps, no). Like adjectives, adverbs may be also be comparative (reasonably, most wisely). As set forth above in relation to adjectives, the natural language processing application will also use the adverbs identified in verbal requests 100-104 to limit or narrow the structured request that is generated and sent to the response generation application 62.

Prepositions are words that combine with a noun or a pronoun to form a phrase. In languages such as Latin or German, prepositions change the form of the noun or pronoun to the objective case or to the possessive case. Conjunctions are the words that connect sentences, clauses, phrases, or words, and sometimes paragraphs. Coordinate conjunctions (e.g., and, but, or, however) are used to join independent clauses, or parts of a sentence; subordinate conjunctions introduce subordinate clauses (where, when, because, if, since, whether). Again, prepositions and conjunctions are used by the natural language processing application to formulate structured requests that are more targeted to the specific requests of users of remote terminals 12 so that the results are more accurate. For example, if a user states that they want "specials on steak dinners or seafood dinners," the natural language processing application will generate a structured request for specials on those two particular types of dinners.

A pronoun is an identifying word that is used instead of a noun and inflected in the same way that nouns are when spoken. In English, there are several different types of pronouns. Personal pronouns consist of: I, you, he/she/it, we, you and they. Demonstrative pronouns are this, that, and such. Who and which are interrogative pronouns when introducing questions and when introducing clauses, they are relative pronouns. In the preferred embodiment of the present invention, although pronouns are identified and categorized, they are preferentially ignored by the natural language processing application, as they provide little value for the purposes of generating a structured request that is sent to the response generation application 62. However, other embodiments may use pronouns in generating structured requests.

Verbs are words that express some form of action. In English grammar, verbs have three moods: the indicative, which expresses actuality; the subjunctive, which expresses contingency; and the imperative, which expresses command (I ran; I might run; Run!). Like nouns, the natural language processing application uses the identified verbs from the verbal requests 100-104 to determine the type of action that the user is requesting to undertake. For example, a verb in a verbal request 100-104 like "purchase" or "buy" will indicate to the response generation application that processes the request that the user is looking to buy a particular item. As such, the natural language processing application will generate structured requests that generate results based on the type of action being requested.

Referring to Fig. 4, each of the requests 100-104 illustrated in Fig. 3 has a particular grammar structure associated with the words contained in each respective request 100-104. While some requests will leverage the same word structure to convey a similar concept or request, other requests will leverage a different word structure to convey a similar concept or request. During operation, the preferred natural language processing application breaks up each request 100-104 into individual parts of speech where the most common words in each part are reused and only the words specific to the request have to be created in a grammar database.

Although not specifically illustrated, in some embodiments, the grammar database is used by the response generation application 62 to locate similar types of requests 100-104 that have been made by users of the remote terminals 12. The response generation application 62 can also keep track of prior structured responses that were made to similar requests 100-104. As such, the grammar database can be built up over time to include almost any type of request 100-104 for a particular product or service, thereby eliminating the need for the response generation application 62 to search the business data files 56 every time a request 100-104 is made. In this preferred embodiment, the grammar database is located in the data files 52. Those skilled in the art would recognize that the grammar database could be located in other locations as well.

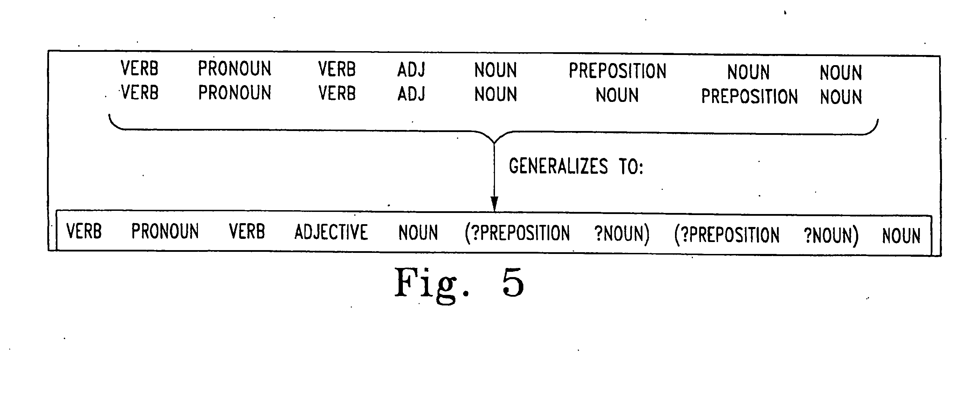

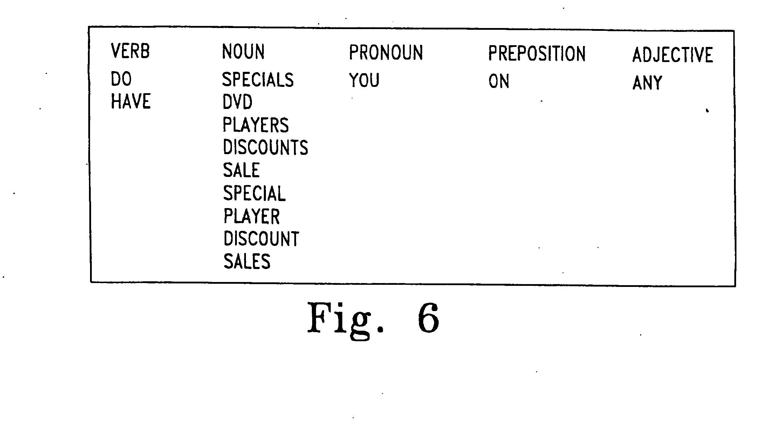

As illustrated in Fig. 5, each of the requests 100-104 set forth in Fig. 3 generalizes into a predetermined set of grammars that are associated with each request 100-104. Referring to Fig. 6, during operation the words contained in each request 100-104 are broken down or generalized into sub-grammar categories with each word falling into a particular category based on its grammatical use in the request 100-104. Once the sub-grammar categories are created, the preferred natural language processing application uses these values to generate a structured request that is processed by the response generation application 62 (see Fig. 2).

In the embodiment being discussed, the response generation application 62 uses these values to search the grammar database for matches that contain words falling into the same grammar category. If an exact match is not made, the response generation application 62 searches he business data files 56 and generates a structured response that is presented to the user of the remote terminal 12 using one of several methods set forth above in relation to other embodiments of the present invention presentation. Once the response generation application 62 has retrieved the proper listing from the business data files 56, the response generation application 62 will update the grammar database if an exact match was not found so that future requests matching that criterion can generate responses with a higher degree of accuracy and speed.

Referring to Fig. 6, each of the requests 100-104 has been broken down into sub-grammar categories to illustrate how the preferred natural language processing application functions during normal operation. As illustrated, there are two words that are located in the "verb" category: "Do" and "have," while there are four implicitly identified words and five explicitly identified words found in the noun category: "specials," "DVD," "players," discounts," "sale," "special," "player," "discount" and "sales". The preferred natural language processing application automatically associates plural forms of words with singular forms of words that are located in the "noun" sub-grammar category so that the search that is conducted for resulting matches will encompass a broader search thereby yielding more reliable results.

Referring once again to Fig. 1 in yet another preferred embodiment of the present invention, when a user of the remote terminal 12 generates a voice request 100-104, it is transmitted to the base station 16, which, in turn, transmits it to the voice recognition server 24. As previously set forth, the voice recognition server 24 uses voice recognition applications that are programmed to recognize or identify the words that are contained in the voice request 100-104. After the words contained in the voice request 100-104 have been identified, a grammar associated with each word is also identified by the natural language processing applications located on the natural language processing server 26. Once the grammars have been identified for each respective word, the natural language processing application categorizes each word into a respective grammar category.

After the words are categorized by the natural language processing application, a structured request is generated by the natural language processing application that is sent to location-based application server 28. The response generation application 62, which is preferentially located on the location-based application server 28, uses this structured request to locate the product or service being requested. The response generation application 62 uses the structured request as an input to a search engine that searches for matches to the products or services being requested in the business data file 56. Once a match is located by the response generation application 62, a structured response to the voice request is generated by the response generation application 62.

In one preferred embodiment of the present invention, the structured response is sent to the voice synthesis server 33, which transforms the structured response into a voice response that is sent to the remote terminal 12. As with other embodiments of the present invention, if multiple listings are located, the voice response can be generated in the form of a menu thereby allowing the user of the remote terminal 12 to interact with the listing of located items. The user of the remote terminal 12 can use an input device, such as a pointer or keypad, to interact with the listings, or the user may be provided to use his/her voice to interact with the listings in other embodiments. In yet another preferred embodiment of the present invention, the structured response is generated as a text message that is sent to the remote terminal 12. Preferentially, the text message is sent to the remote terminal 12 using a wireless application protocol. In yet other embodiments, the text message may also be accompanied by image files or sound files.

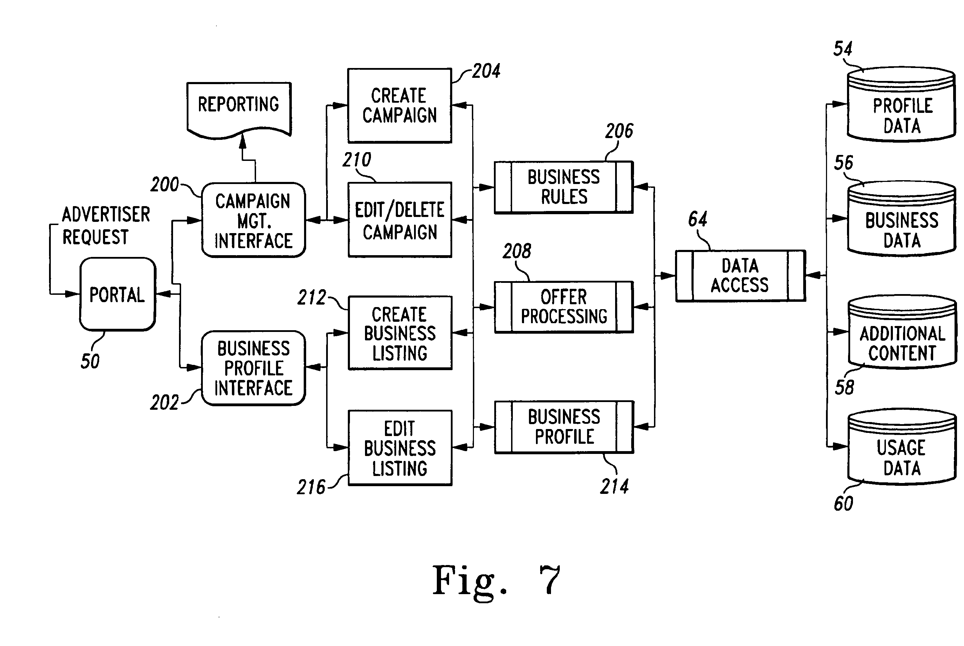

Referring to FIG. 7, wherein like numbered references refer to common elements found throughout the figures, another preferred embodiment of the present invention enables a business user or advertiser via a web connected business terminal 46 to access the location-based services system 10 to create and manage advertising campaigns and business listings. This is preferentially accomplished with a web based user interface that provides the user with the ability to create and manage advertising content and business listings. As such, business owners that subscribe to the location-based services system 10 are capable of creating, modifying or deleting advertising content or business listings that are provided to users of the location-based services system 10 at their respective business location. As such, a business owner does not necessarily have to contact the owner or operator of the location-based services system 10 in order to create, modify or delete advertising campaigns or business listings.

As illustrated in FIGS. 1 and 7, the business advertiser would preferentially access the advertiser portal 50 through a web browser and the advertiser portal 50 would serve as a gateway to the location-based services system 10. Business data is captured through the advertisers interaction with the advertising portal 50 using the business remote terminal 46. Preferentially, there are at least two applications within the advertiser portal 50 that provide the user with the ability to select, view, add, edit and delete advertising campaigns or business listings. The preferred advertiser portal 50 includes a campaign management interface application 200 and a business profile interface application 202. Within each of these applications 200, 202 there are preferentially two options available to the business user.

As set forth in greater detail below, the campaign management interface application 200 allows the business user to create campaigns, edit campaigns and delete campaigns. The business profile interface application 202 allows business users to create business listings and edit business listings. The applications that support the above-referenced applications include a business rule application, an offer processing application, a business profile collection application and a data access application, which are described in the following sections.

Advertising campaigns differ from business listings in the preferred embodiment of the present invention. Generally speaking, an advertising campaign is directed toward specials, discounts or deals that are available on specific products or services that are provided by business subscribers of the location-based services system 10. Business listings relate to a broad range of information that are provided by business users that might include a business name, address, product type(s), service type(s), menu(s), brand type(s), pricing information, model type(s) and hours of operation, for instance. Business listings will tend to remain static while advertising campaigns will tend to only run for predetermined periods of time. For example, a pizza restaurant may offer large pepperoni pizzas in their business listings all the time, but may only run specials on these pizzas once per month.

A create campaign application 204 on the advertiser portal 50 captures data from the campaign management interface application 200, which is used to capture data from the advertiser in order to create a location-based advertising campaign. During operation, the campaign management interface application 200 preferentially generates a web-based user interface that allows the business user to enter detailed parameters for the campaign on their respective business remote terminal 46. As such, an advertising campaign parameter entry form is preferentially generated on the business remote terminal 46 to allow the business user to enter advertising parameters.

Once the advertising parameters are entered, the information is sent to the campaign management interface application 200, which forwards the information to the create campaign application 204 and a business rules application 206. If the customer enters in specific deal information along with the advertisement, the create campaign application 204 and an offer processing application 208 will be used to process the request. After each respective application processes the advertising campaign, it is then stored in the business database 56 with the assistance of the data access component 64.

An edit/delete campaign application 210 can also be accessed through the campaign management interface application 200 that allows the advertiser to modify or delete an existing advertising campaign. When the advertiser selects this option, a list of existing campaigns will be retrieved and displayed on the web browser of the business remote terminal 46, which is generated by the advertiser portal 50. If the advertiser desires to modify a respective campaign, they would select the campaign in a list and the campaign data entry fields would then be presented. The advertiser can then edit the parameters for a campaign and submit the changes. This information is then passed to the edit/delete campaign application 210 and the business rule application 206 for processing into the business database 56.

The preferred embodiment also allows the business remote terminal 46 to delete entire campaigns. During operation, when the advertiser wishes to delete a respective campaign, the advertiser would select the campaign in a list of campaigns being run by the advertiser and the campaign data entry fields are preferentially presented in an interactive manner via the advertiser's web browser. Once the appropriate campaign is selecting, the advertiser can select a delete option presented on the web browser in order to delete the campaign, or possibly a section of a larger campaign. A respective advertiser will send this information, preferentially via the Internet, to the edit/delete application 210 and the campaign is then deleted from the business database 56.

The advertiser portal 50 also includes a business profile interface 202 that has a create business listing application 212 that captures data from the advertiser in order to create a location-based business listing. First, the advertiser enters the business listing data into the user interface created by the business profile interface 202 and then submits the information for processing by the advertiser portal 50. Preferentially, a business listing entry form is generated on the business remote terminal 46 that allows the business user to enter business listing data that is associated with their respective line of business.

Once the advertiser portal 50 receives the business listing data, it is directed to the create business listing application 212, which is responsible for the creation of business listings based on the business user's inputs to the business listing entry form. The information is also directed to various applications including a business profile application 214 and the business rules application 206. The business listing information is then sent to the data access component 64 in order to store the business listing data into the business database 56.

An edit business listing application 216 allows the advertiser to update a location-based business listing. When editing business listings, the advertiser enters data into the user interface and submits the information for processing. The edited information is then sent to various applications including the business profile application 214 and the business rules application 206. The data access component 64 receives this information from the advertiser and updates the appropriate business listing data within the business database 56.

As previously set forth, the applications that support applications 204, 210, 212 and 216 include the business rules application 206, the offer processing application 208, the business profile application 214 and the data access component 64. The business rules application 206 is a collection of parameters associated with a campaign or listing that has been created with the location-based service system 10. The parameter information captured is utilized in the implementation of the advertising campaign or the business listing. An example of parameter information might include: For the '2 for 1 drink special', target men between 21-35 that request a bar or restaurant in Atlanta. The business rules application 206 allows the advertiser to target specific types of users of the location-based services system 10 that have predetermined types of characteristics or fall within a general category.

The parameter information that can be used will preferentially be divided into five categories, which include demographic targeting restrictions, target market restrictions, location restrictions, length of time restrictions and historical interaction restrictions. The demographics targeting restrictions may include, but are not necessarily limited to: gender; age; ethnicity; marital status; children; income; special interests; hobby; education; homeowner; and car owner. The target market restrictions preferentially include city and state information. Location restrictions may include address and radius from remote terminal 12 and consumer terminal 40. The length of time for the campaign restrictions may include such parameters as start date and end date. The historical interaction restriction parameters may include areas, categories and types of listings that respective remote terminals 12 and consumer terminals 40 have accessed.

The offer processing application 208 processes the information associated with creating a deal or a special offer. As set forth above, during operation the advertiser provides the create campaign application 204 and the edit/delete campaign application 210 with a detailed description of the deal, the market for the deal as well as parameters or rules associated with the deal using the business rules application 206. The offer processing application 208 processes the data entered from the create campaign application 204 or the edit/delete campaign application 210 before it is passed to the data access component 64.

The business profile application 214 is responsible for collecting the advertiser profile information. This information is used to create a business profile listing for the advertiser. This information preferentially includes, but is not necessarily limited to, the following: business name; business category; product types; service type(s); franchise; business e-mail address or URL; product name(s) and/or model name(s); identification code(s); product brand(s); price(s); location address; hours of operation and category listing selections. As such, the business profile application 214 allows the advertiser to use the business remote terminal 46 to send profile listing information to the advertiser portal 50, which forwards it to the data access component 64 for storage in the profile database 54. The data access component 64 is used to access databases 54-60, which hold all of the location-based service network information. This component is used to retrieve data as well as enter data into respective databases 54-60. Data may also be deleted from any respective database as well.

Although not illustrated, another preferred embodiment of the present invention allows a wireless business remote terminal to access the advertising campaigns and business listings that have been created by respective advertisers. In this embodiment, the wireless business remote terminal would be connected to a base station that includes a wireless application protocol gateway. The wireless application protocol gateway would allow the wireless business remote terminal to access and interact with the content 52 of the location-based services system 10. As such, if an advertiser was not located at a conventional desktop computer system, they would still be able to create, edit and delete advertising campaigns and business listings from a wireless communication device.

Referring to FIG. 1, in yet another preferred embodiment of the present invention advertiser subscribers using remote terminal 46 are provided with a usage mining system 300. The usage mining system 300 provides the ability to research usage trends and transactions of the location-based service system 10 via a web application. In FIG. 1, the advertiser preferentially accesses this capability via the advertiser portal 50 using a web browser at business remote terminal 46, which preferentially serves as a gateway to the application platform. The advertiser portal 50 provides a user of business remote terminal 46 with the ability to access and retrieve data that is stored in the usage data files 60.

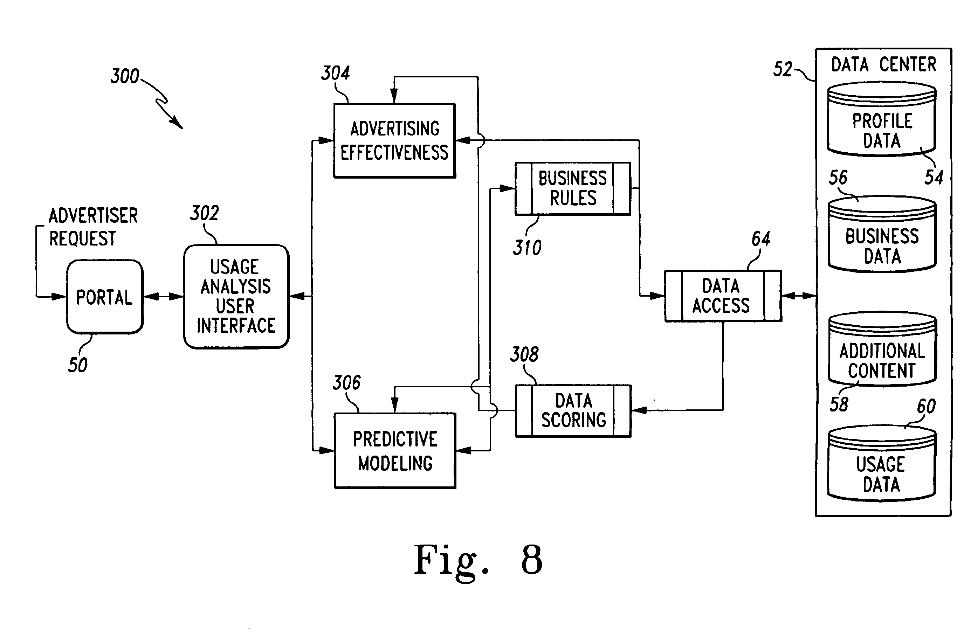

Referring to FIG. 8, a preferred embodiment of the present invention includes a usage analysis user interface 302 that preferentially provides a web-based user interface to the usage mining system 300. Using the usage analysis user interface 302, the advertiser is able to select a first analysis option that generates detailed usage analysis from the location-based services system 10. The usage mining system 300 will preferentially generate analysis based on two categories of analysis options. The preferred analysis options include (but are not limited to) an advertising effectiveness analysis application 304 and a predictive modeling application 306. During operation, the user will select fields within each application 304, 306 to create a search query. Based on the inputs, the application 304, 306 will determine the necessary components to access in order to generate the correct analysis. Although not illustrated, a general search query may also be provided that allows the user to search the entire usage database 60 based on searching predetermined parameters.

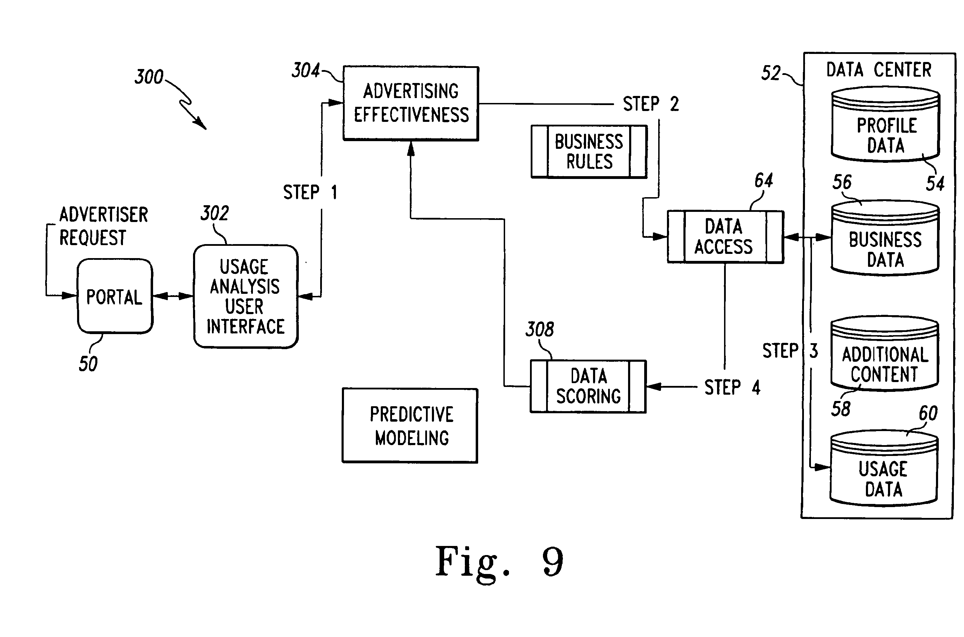

The preferred steps performed by the advertising effectiveness application 304 are illustrated in FIG. 9. The advertising effectiveness application 304 utilizes the business data files 56 and the usage data database 60 in the location-based services system 10 to generate analysis surrounding the effectiveness of location-based advertising campaigns. The analysis will be capable of addressing questions such as "How many people received my campaign in the downtown area of Atlanta?" The information provided to advertisers provides them with insight to quantify the results of advertising campaigns created with the location-based services system 10.

The user must first determine and enter the input variables that will be used for searching, which is preferentially done via a web-based interface using the business remote terminal 46. Once a search query is entered, it is used to retrieve and view the data stored in the business data files 56 and the usage data database 60. The advertising effectiveness application 304 retrieves data from the business data files 56 and the usage data database 60 to match request parameters that are input by the user. The advertising effectiveness application 304 will then forward the search results to the usage analysis user interface 102, which displays the resulting search response via the web browser on the business remote terminal 46.

Referring to FIG. 9, during operation a user of business remote terminal 46 receives a query entry form from the usage analysis user interface 302. Once a user enters search parameters into the query fields on the query entry form, a search request is sent from business remote terminal 46 to the advertiser portal 50. If the user is using the advertising effectiveness application 304, the search request is sent to a data access component 64. The data access component 64 searches the business data file 56 and the usage data database 60 to retrieve search results that match the criteria set forth in the search request. The search results may then be directed toward a data scoring application 308, which is capable of reformatting the search results into various different types of formats.

As illustrated in FIG. 1, in the preferred embodiment of the present invention the content files 52 are located on the location-based application server 28. As such, although not specifically illustrated in FIGS. 8-10, the usage analysis user interface 302 may have to access the location-based application server 28 to retrieve the desired information. In addition, the data access component 64 is preferentially located on the location-based application server 28. As such, the usage mining system 300 preferentially generates search requests that are transmitted to the data access component which in turn, actually performs the searching on the location-based application server 28. However, in other preferred embodiments of the present invention the content files 52 could be mirrored on the advertiser portal 50 and all processes could be performed at that location as well.

Once the search results are placed in the proper format, the advertising effectiveness application 304 uses the usage analysis user interface 302 to generate a viewable output on business remote terminal 46. Preferentially, the results are provided using a web browser on the business remote terminal 46; however, other ways of providing the results may also be used. The search results may be displayed using numbers, graphs, charts, images or any other method for providing analysis results.

A list of inputs (at a minimum) that may be used within the advertising effectiveness application 304 include, but are not necessarily limited to: a respective advertising campaign, demographic information, a date or time period, location information, by category, type of listing category, competitive listing categories and a key word inputs. Examples of the type of feedback the user will receive include (but are not necessarily limited to) the following: measure of number of customers reached; frequency of advertisement or listing; competitive analysis comparing advertising listing frequency to category; cost per impression; number of customers reached by top three demographic segments; and 1) demographics (gender, age, ethnicity, marital status, children, income, special interests, hobby, education, homeowner, car owner); 2) target market (city and state); and 3) location (address and location at time of historical interaction).

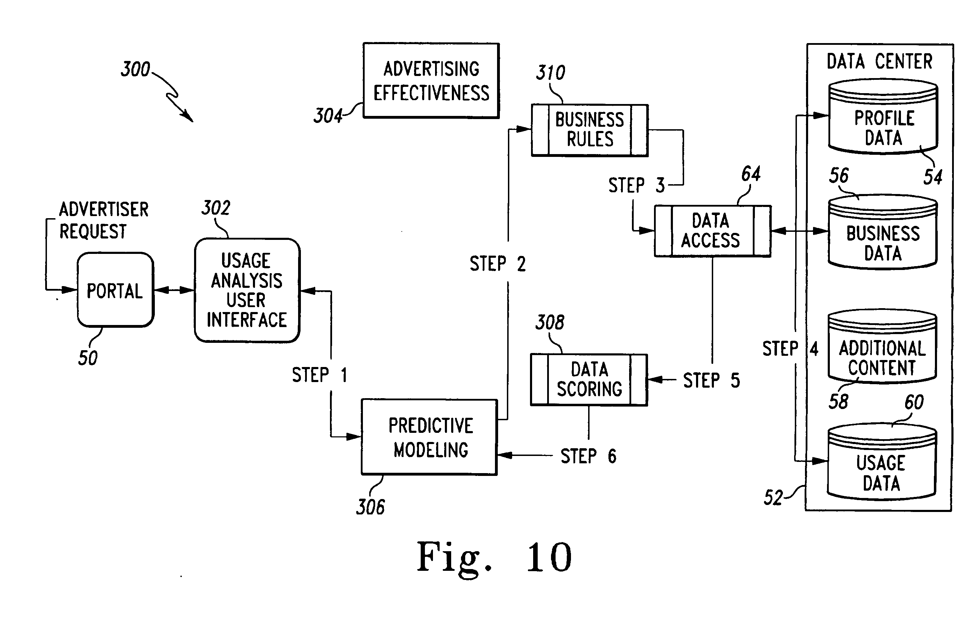

The preferred steps performed by the predictive modeling application 306 are illustrated in FIG. 10. The predictive modeling application 306 provides the capability of forecasting or making projections of the type and number of users using remote terminals 12, 40 that will likely respond to offers, listings, campaigns and deals. Examples of the type of feedback the user will receive include (but are not necessarily limited to) the following: identifying customers likely to respond to their campaign by customer segment; identifying customers likely to respond to campaigns or offers for certain products or services, identifying customers likely to request a campaign or listing by customer segment; and identifying demands by peak time or day.

During operation, the user enters as an input into the predictive modeling application 306 the proposed future advertising campaign/deal as well as the business rules associated with it. Entering and submitting this information builds a search query with the necessary search parameters to explore the profile database 54 and the usage data database 60. The data access component 64 searches the respective databases to find data elements that match the search query. The search results obtained are preferentially sent to the data scoring application 308 to determine the statistical probability of a proposed campaign's success. These results are then returned to the predictive analysis application 306 to be displayed through the usage analysis user interface 302 on the business remote terminal 46.

Referring to FIG. 10, if an advertiser uses the predictive modeling application 306, preferentially the usage analysis user interface 302 generates a search parameter entry form that is sent from the advertiser portal 50 to the business remote terminal 46. This allows advertisers to enter search parameters that include potential products or services that are going to be offered along with the business rules that go along with the potential offering. The business rules may include discount information, special deals (e.g., buy two, get one free), special rates or any other type of incentive or restriction. Once the search parameters are entered, the advertiser submits them to the advertiser portal 50, which then forwards the search parameters to the predictive modeling application 306.

The predictive modeling application 306 then uses a business rules application 310 to extract the appropriate parameters from the search request to formulate a proper search to be submitted to the profile database 54 and the usage data database 60. Once formatted into a proper search format, the business rules application 310 uses data access component 64 to run a search through the profile database 54 and the usage data database 60. The data access component 64 then forwards the search results to the data scoring application 308, which formats the results into one of several possible viewable formats.

After the data scoring application 308 formats the search results into a usable format, the search results are sent to the predictive modeling application 306. The predictive modeling application 306 then uses the usage analysis user interface 302 to transmit the response from the advertiser portal 50 to the business remote terminal 46. Preferentially, the results are presented to the advertiser via a web browser on the business remote terminal 46.

The predictive mining input options that are available to advertisers include (but are not necessarily limited to) the following: advertising campaigns; target dates (start date and end date); type of listing category; demographics (gender, age, ethnicity, marital status, children, income, special interests, hobby, education, homeowner, car owner); 2) target market (city and state); and 3) location (address and location at time of historical interaction). Other input options can be provided as needed to allow a more flexible search to be conducted by the advertiser.

Although not illustrated, in the preferred embodiment of the present invention a wireless communication device may be used to mine data from the location-based services system 10. In this embodiment, the wireless communication device connects to the advertiser portal 50 and uses a wireless application protocol to submit searches in a similar fashion as set forth above. As such, those skilled in the art should recognize that the business remote terminal 46 does not have to be limited to a personal computer and should also be viewed as including wireless communication devices as well.

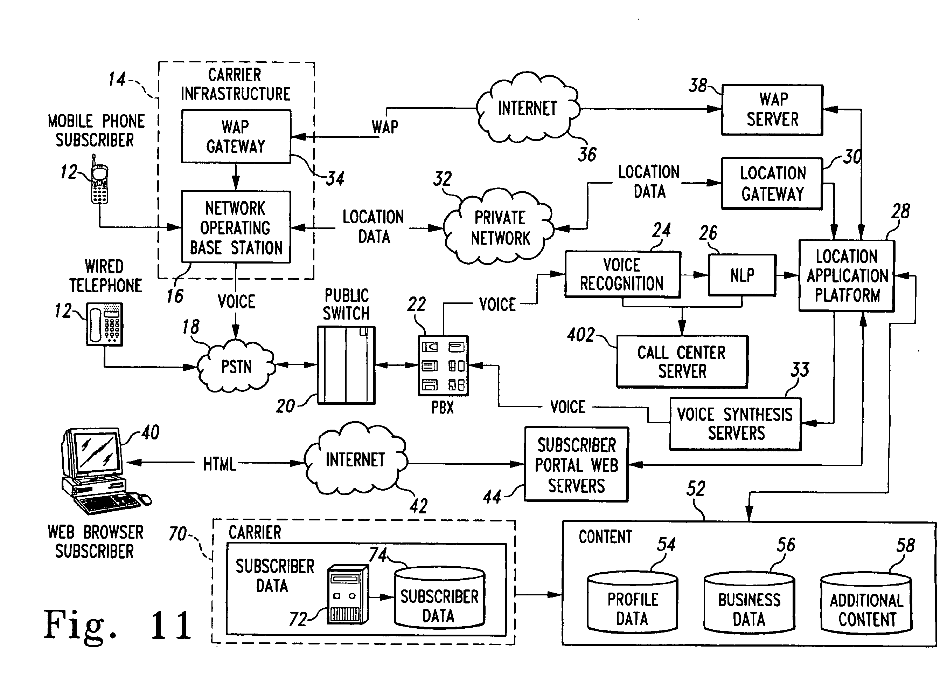

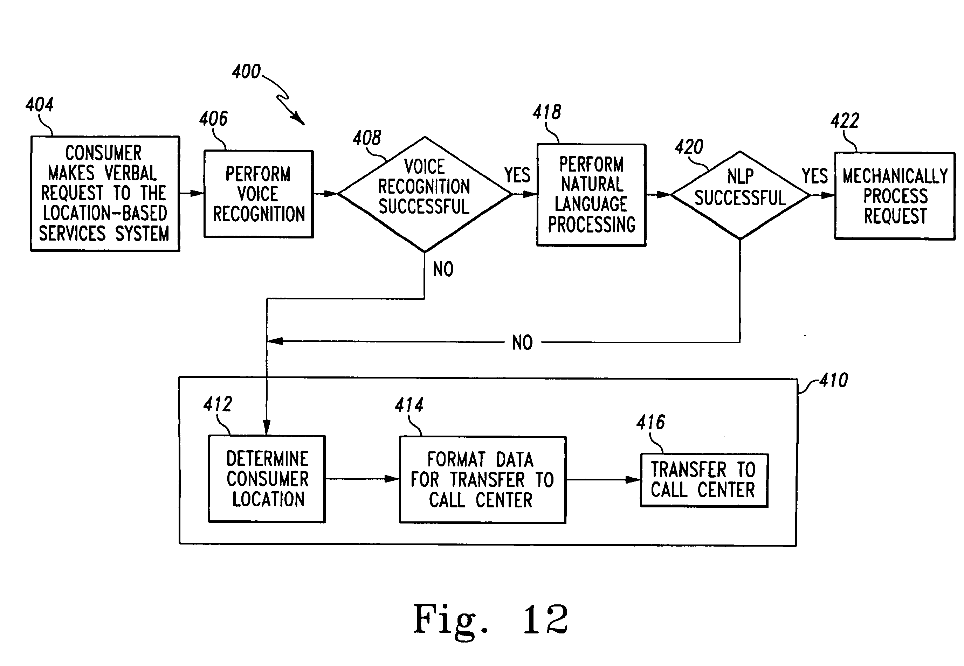

Referring to Figs. 11 and 12, another aspect of the present invention discloses a call failure system 400 that routes call failures to an operator in a location-based services system 10. The call failure system 400 is preferentially located on a call center server 402 that is connected to the voice recognition server 24 and the natural language processing server 28. During operation consumers input structured requests into the location-based services system 10 using one of three access methods: via a voice access method (wireless or wire line), a wireless application protocol such as WAP, or web application protocol such as HTML (or any other suitable markup language). As set forth in greater detail above, the means by which user requests are transmitted to respective service handlers is based upon the chosen access method.

For a voice access method, consumers initiate a voice call from the remote terminal 12, 40 that preferentially may be selected from a wireless communication device, a remote computer terminal and a regular telephone. If the voice call is initiated from a wireless remote terminal 12, the voice call is routed to the PBX 22 from the wireless communication system 14. The manner in which the other access methods set forth above route voice calls for processing will vary depending upon the particular type of access method used in the location-based services system 10.

Consumers access the location-based services system 10 and when prompted provide a structured request for information about a particular product. Preferentially, the structured request is entered by the consumer using natural language, which means the type of language that is used during the normal course of speaking and not broken or parsed versions of respective languages. Although a wireless remote terminal 12 is discussed in the sections that follow, various voice-based communication devices could be used to provide structured requests to the location-based services system 10. Structured requests are requests for information about a particular product that contain voice signals that can be used by the location-based services system 10.

In the preferred embodiment, once the structured request reaches the PBX 22 it is forwarded to the voice recognition server 24 for signal digitization and voice recognition by a voice recognition application. Next, the words chosen as the highest probable match for the words contained in each respective voice signal are passed to the natural language processing server 26. The natural language processing server 26 assesses the holistic validity of the chosen words in the voice signals and interprets the likely context and meaning from the words. It then identifies the application services required to fulfill the request, generates a structured search request containing the necessary message (as required by the appropriate application service) and passes this message or structured search request to the location-based application server 28.

As set forth in Fig. 11, the natural language processing server 26 is connected to the location-based application server 28. As set forth in detail above, the location-based application server 28 is programmed or operable to provide responsive information to the remote terminals 12, 40 that has been requested by a respective user of the remote terminal 12, 40. Generally speaking, the location-based application server 28 is used to retrieve and pass on location-based information to the remote terminals 12, 40 using various types of data formats. The type of information provided to the remote terminals 12, 40 varies depending on the specific nature of the information that has been requested from the user and the geographic location of the remote terminal 12, 40.

During operation, after the meaning of the words in the voice signals are interpreted, the natural language processing server 26 is programmed or operable to create a structured request that is sent to the location-based application server 28 requesting information that depends on the consumer's request. In response to the structured request from the natural language processing server 26, the location-based application server 28 generates a structured response that is sent to the remote terminal 12, 40. The exact nature or contents of the information sent in the structured response that is generated by the location-based application server 28 depends on the specific details of the tailored request for information that is made by a particular user of the remote terminal 12, 40.

When either the voice recognition server 24 or the natural language processing server 26 fail to successfully process the voice input provided by the consumer with the remote terminal 12, 40, the voice call is forwarded to the call failure system 400 for completion as shown in Fig. 11. The call failure system 400 preferentially connects the user to an operator who can assist the consumer locate listings or offers for the particular product or services that they are looking for since either the voice recognition server 24 or the natural language processing server 26 failed to properly process the structured request. The operator can also assist the consumer complete transactions over the location-based services system 10 as well.

Referring to Fig. 12, a more detailed description of the steps performed by the call failure system 400 to route and handle call failures in the location-based services system 10 will be described below. At first, a consumer enters their verbal request into the remote terminal 12, 40 at step 404. Next, at step 406 the voice input is digitized and processed by the voice recognition server 24. At step 408, if the voice recognition server 24 fails to recognize the words contained in the voice signal that is input by the user to a specified level of accuracy, then the location-based services system 10 takes steps to ensure that the request is properly processed by forwarding the request to a request failure application 410.

As illustrated, the request failure application 409 first determines the location of the user of the remote terminal 12, 40 by generating a location data request that is based upon a remote terminal identifier (such as the remote terminal phone number for example) at step 412. For wireless remote terminals 12 can use location gateway applications to generate the location data. Other access methods can use other methods of determining the location of the user such as, for example, a user of remote terminal 40 can have a setting that indicates the location of the remote terminal 40. In the case of a regular telephone, caller id mechanisms could be used to determine the geographic location of the user.

Once the location data request is generated it is sent to the location gateway 30 of the wireless communication system 14. In response to the location data request, the wireless communication system 14 generates a location response that is sent to the request failure application 410. Once the request failure application 410 receives the location data it is parsed if necessary and the location value is extracted. Once the location of the user is determined an operator message is created that includes (but is not limited to) the caller phone number and their location information at step 414. The user is also preferentially notified that their call is being processed via a synthesized or recorded message that can be generated and sent to the user from the voice synthesis server 33. The operator message and the call is then forwarded by the call failure system 400 to the operator call routing system or call center for completion at step 416.

If the voice recognition server 24 successfully recognizes the voice input to a specified level of confidence, then the phonemes and/or words that were identified by the voice recognition server 24 are transmitted to the natural language processing server 26 at step 418. The natural language processing server 26 is used to determine the context and intent of the consumer's request. If the natural language processing server 26 fails to recognize the context or intent of the consumer's request to a specified level of confidence, then the request is forwarded to the request failure application 410, which is illustrated at step 420. If the natural language processing application 26 determines the context or intent of the speech to a specified level of confidence or accuracy, then the location-based application server 28 processes the request for information and a response is generated and sent to the user, which is illustrated at step 422.

If the natural language processing application 26 indicates that it cannot determine the context or intent of the user's request with a high enough degree of accuracy, as with failures related to the voice recognition server 24, the request failure application 410 first determines the location of the user of the remote terminal 12, 40. This is accomplished by generating a location data request that is based upon a remote terminal identifier (such as the remote terminal phone number for example) at step 412. For wireless remote terminals 12 can use location gateway applications to generate the location data. Other access methods can use other means of determining the location of the user such as, for example, a user of remote terminal 40 can have a setting that indicates the location of the remote terminal 40. In the case of a regular telephone, caller id mechanisms could be used to determine the geographic location of the user.

Once the location data request is generated it is sent to the location gateway 30 of the wireless communication system 14. In response to the location data request, the wireless communication system 14 generates a location response that is sent to the request failure application 410. Once the request failure application 410 receives the location data it is parsed if necessary and the location value is extracted. Once the location of the user is determined an operator message is created that preferentially includes (but is not limited to) the caller phone number and their location information at step 414. The user is also preferentially notified that their call is being processed via a synthesized or recorded message that can be generated and sent to the user from the voice synthesis server 33. The operator message and the call is then forwarded by the request failure application 410 to the operator call routing system or call center for completion at step 416.

As generally set forth above, if the natural language processing server 26 successfully recognizes the context and intent of the user's request to a specified level of confidence, then the necessary application service(s) are identified to satisfy the user's request. The appropriate response is created by the location-based application server 28 and the resulting information is provided back to the consumer via a synthesized voice message.

Referring to Fig. 1, in yet another preferred embodiment of the present invention consumers are provided the ability to search via a remote terminal 12, 40 for a business that will satisfy specific purchase or service requirements via multiple access methods, which as set forth above may include using voice commands, wireless application protocols or web application protocols. The consumers are allowed to search for products, which as used herein shall refer collectively to goods and services. Based upon the parameters included in the search query or structured request that is input by the consumer, the location-based services system 10 will identify and respond to consumer requests with the most appropriate matches. Likely, these matches will preferentially include special offers or deals that are used by advertisers to attract potential consumers to purchase their respective products, services or visit their business locations.

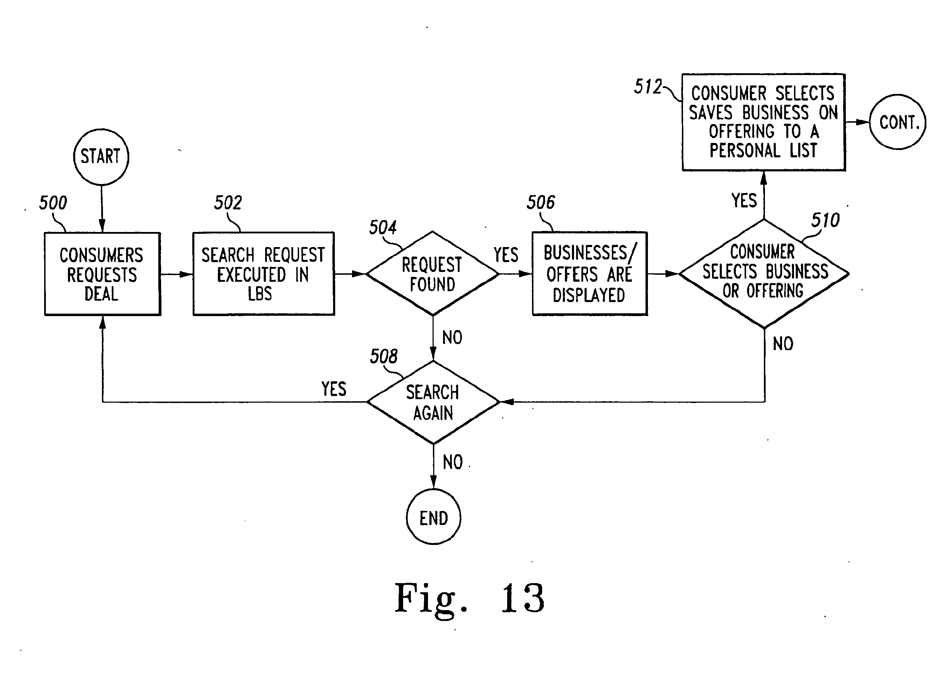

Referring to Fig. 13, depending on the access method used, at step 500 the consumer uses his or her remote terminal 12, 40 to submit a request or query for a deal on a particular product or service using the location-based services system 10. The search request is then processed by the location-based services system 10, which is represented at step 502. At step 504, the location-based services system 10 determines if a valid search result is found in response to the search request. If a valid search result is generated by the location-based services system 10, the search result is then sent to the consumer and displayed on the remote terminal 12, 40, which is illustrated at step 506. If no valid search results are obtained, the consumer is prompted to either enter another search by being allowed to refine their search or they are allowed to exit the location-based services system 10, which is represented at step 508.

As previously set forth, if a valid search result is obtained the search results are displayed on the remote terminal 12, 40. The consumer is provided with the ability to review details about each of the matched listings using the remote terminal 12, 40. As set forth above, the listings preferentially include special deals or offers that are responsive to the consumer's input. For illustrative purposes only, let's say a consumer enters a search request such as: "Who has a dinner special near my present location tonight?" In response to this search request, the location-based services system 10 might generate a response such as "The Tavern Restaurant and Bar in downtown Atlanta is offering you $15 off of your total dinner purchase of $40 or more with the use of your American Express Card for your dinner purchase. Please mention offer 10789." Of course, more than one response or offer may be presented in a menu format on a display of the remote terminal 12, 40 or in the case of voice commands, the consumer may use keys or another input device on the remote terminal as well as voice commands to select offers that are presented in a list or menu format by the voice synthesis server 33.

During operation, when consumers make search requests the information contained in each search request is preferentially captured and stored in the usage data files 60 within the location-based services system 10. The response that is generated to each search request is also captured and stored for tracking purposes. The information that is captured and stored in the usage data files 60 may include, but is not necessarily limited to the following: a campaign number or identifier, a merchant name, a consumer name (or encoded id), a consumer wireless number (or encoded id), a campaign code, a date, a time, a geographic location of the consumer when making the request, and an offer number.

After the businesses or offers are displayed to the consumer, the consumer is provided with an option of selecting a particular business listing or offer at step 510. If the consumer does not select a particular business listing or offer they are provided with the ability to either conduct another search, which is represented at step 508, or exit the location-based services system 10. If the consumer selects a business listing or offer in the list that is presented to the user, then the location-based services system 10 saves the business listing or offer to a personal list that this associated with the consumer in the usage data files 60, which is represented at step 512. The location-based services system 10 also saves the information about the consumer's selection in usage data files 60 that are associated with the selected business so that the selected business can be notified about the consumer's purchase or request.

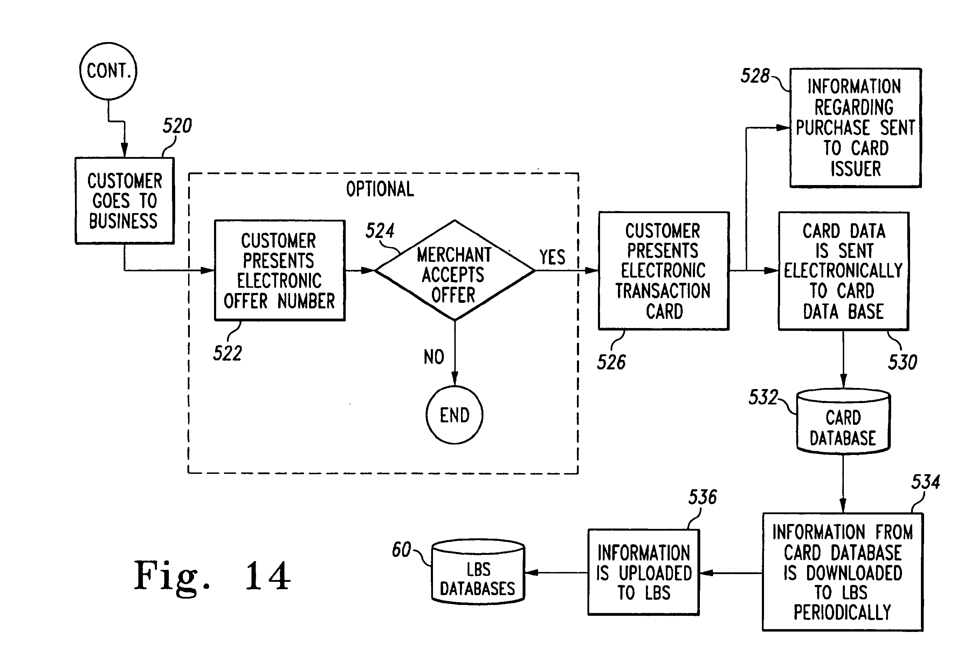

Referring to Fig. 14, in one preferred embodiment of the present invention the consumer would go to the place of business that made the offering or appeared in the business listing that is presented to the consumer, which is represented at step 520. When applicable, at step 522 the consumer presents the offer number to the business that is generated at the time of the initial interaction on the location-based services system 10. At step 524, the business would then validate the offer number if provided or necessary by looking up information associated with the offer number on the business remote terminal 46. In order to validate the offer, the business remote terminal 46 accesses the usage data files 60 to determine the exact nature of the offer and what service or product should be provided to the consumer based on that offer.

After the offer number has been approved, the consumer then completes the purchase process by paying for the item with a designated electronic payment card, which is represented at step 526. When the consumer completes the purchase transaction via an electronic payment card, the information is captured and is sent to the card issuer for payment at step 528. At this point, the business is paid for its respective goods or services and the consumer is able to receive their respective goods or services. In alternative embodiments, the entire transaction can be completed by remote terminals 12, 40, especially in instances that do not require a visit to a business location by the consumers.

As illustrated at step 530, the location-based services system 10 also sends the card data within a card data file, preferentially in a periodic batch process, to a card database 532. The card data is then downloaded by the location-based services system 10 from the card database 532 at step 534 and then uploaded into the usage data files 60 at step 536. Key information found within the electronic card data include, but are not necessarily limited to, the following: card number, merchant code, merchant name, address of merchant, transaction type, name of consumer items or services purchased, amount of purchase, date of purchase, and time of purchase.

Referring to Fig. 13, although not specifically illustrated, once the consumer selects the business listing offering at step 512, the consumer could also arrange to have the product or service delivered or provided at a predefined address. Some products or services that are purchased using the location-based services system 10 may not require the consumer to travel to the business location in order to complete the transaction. However, it is envisioned that most consumers will be traveling to the business location to complete the transaction, such as finding a restaurant that is running a dinner special or a store running a special on a particular item in the geographic location of the consumer.

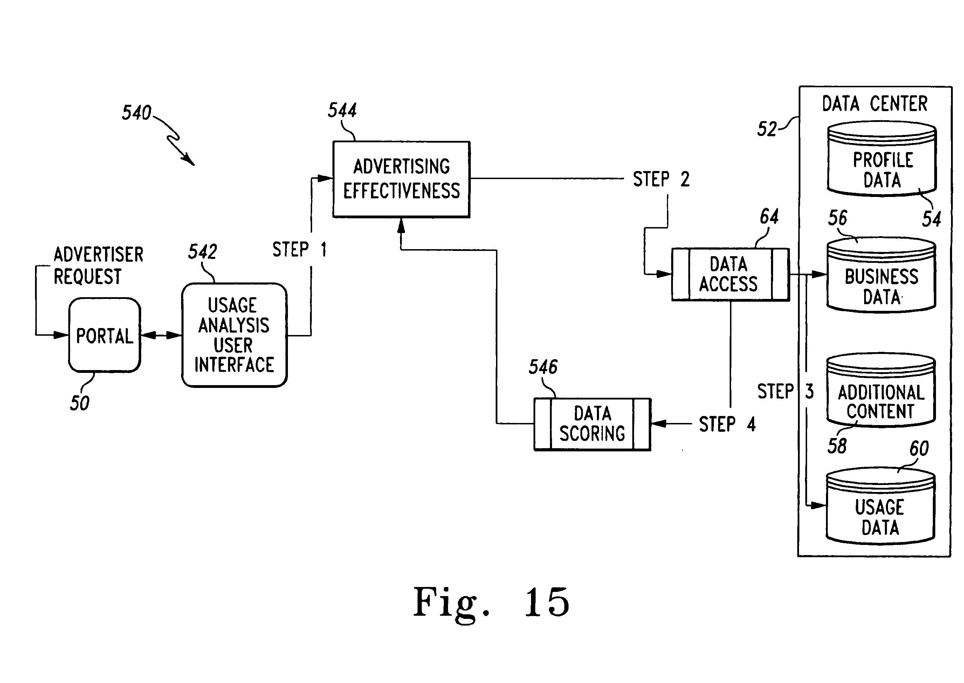

Referring to Fig. 15, the preferred steps performed by an advertising effectiveness application 540 are illustrated in Fig. 14. The advertising effectiveness application 540 utilizes the business data files 56 and the usage data files 60 in the location-based services system 10 to generate analysis surrounding the effectiveness of location-based advertising campaigns. The analysis is capable of addressing questions such as "How many people received my campaign in the downtown area of Atlanta?" The information provided to advertisers provides them with insight to quantify the results of advertising campaigns created with the location-based services system 10.

The user must first determine and enter the input variables that will be used for searching, which is preferentially done via a web-based interface using the business remote terminal 46. Once a search query is entered, it is used to retrieve and view the data stored in the business data files 56 and the usage data database 60. The advertising effectiveness application 540 retrieves data from the business data files 56 and the usage data database 60 to match request parameters that are input by the user. The advertising effectiveness application 540 will then forward the search results to a usage analysis user interface 542, which displays the resulting search response via the web browser on the business remote terminal 46.

Referring to Fig. 14, during operation a user of business remote terminal 46 receives a search query entry form from the usage analysis user interface 542. The search query entry form is preferentially generated from an advertising effectiveness routine 544 that is associated with the usage analysis user interface 542. Once a user enters search parameters into the fields on the query entry form, a search request is sent from the business remote terminal 46 to the advertiser portal 50. The search request is then directed to a data access component 64, which searches the business data file 56 and the usage data files 60 to retrieve search results that match the criteria set forth in the search request. The search results may then be directed toward a data scoring application 546, which is capable of reformatting the search results into various different types of data formats.

As illustrated in Fig. 1, in the preferred embodiment of the present invention the content files 52 are located on the location-based application server 28. As such, although not specifically illustrated, the advertising effectiveness application 540 may have to access the location-based application server 28 to retrieve the desired information. In addition, the data access component 64 is preferentially located on the location-based application server 28. As such, the advertising effectiveness application 540 preferentially generates search requests that are transmitted to the data access component 64 which in turn, actually performs the searching on the location-based application server 28. However, in other preferred embodiments of the present invention the content files 52 could be mirrored on the advertiser portal 50 and all processes could be performed at that location as well.

Once the search results are placed in the proper format, the advertising effectiveness routine 544 uses the usage analysis user interface 542 to generate a viewable output on the business remote terminal 46. Preferentially, the results are provided using a web browser on the business remote terminal 46; however, other ways of providing the results may also be used. The search results may be displayed using numbers, graphs, charts, images or any other method for providing analysis results.

A list of inputs (at a minimum) that may be used within the advertising effectiveness application 540 include, but are not necessarily limited to: a respective advertising campaign, demographic information, a date or time period, location information, by category, type of listing category, competitive listing categories and a key word inputs. Examples of the type of feedback the user will receive include (but are not necessarily limited to) the following: measure of number of customers reached; frequency of advertisement or listing; competitive analysis comparing advertising listing frequency to category; cost per impression; number of customers reached by top three demographic segments; and 1) demographics (gender, age, ethnicity, marital status, children, income, special interests, hobby, education, homeowner, car owner); 2) target market (city and state); and 3) location (address and location at time of historical interaction).

In order for the merchant/advertiser to determine the campaign or deal offering success, the advertiser will access the advertiser portal 50 within the location-services system 10. The advertiser will then use the usage analysis user interface 542 and the advertising effectiveness routine 544 to determine how many people responded to the deal or special offer.

Selecting and submitting information to a search query allows businesses to explore and search the advertising campaign data stored in the business content database 52. The location-based services system 10 retrieves data from the usage data files 60 to match the request parameters input by the user. The system will then display the resulting response via the web browser. Examples of the type of feedback the user will receive include (but not limited to the following: measure of number of customers reached, amount of tracked sales, number of tracked sales, competitive analysis comparing advertiser listing sales to category sales, cost per sale, total sales reached by top 3 demographic segments, demographics (i.e. - gender, age, ethnicity, marital status, children, income, special interests, hobby, education, homeowner, car owner), target market, city, state, location, address, and location at point of interaction.

While the invention has been described in its currently best-known modes of operation and embodiments, other modes, embodiments and advantages of the present invention will be apparent to those skilled in the art and are contemplated herein.

## Claims

1. A method for routing call failures, comprising the steps of;
connecting a remote terminal (12,40,46) to a location-based services system;
receiving a voice-based request for information from said remote terminal;
interpreting said voice-based request for information with a voice recognition application of the location-based services system; wherein the method is **characterized by** further comprising the steps of:
transmitting said interpretation of said voice-based request for information from said voice recognition application to a natural language processing application of the location-based services system; and, in response to said natural language processing application failing to interpret the intent of said voice-based request for information to a predetermined level of accuracy:
determining a geographic location of said remote terminal;
routing said remote terminal connection to a call center server connected to said location-based services system; and
forwarding an indication of said geographic location of said remote terminal (12,40,46) to said call center server.

2. The method of claim 1, wherein the step of determining the geographic location of said remote terminal comprises accessing an indication of a location of the remote terminal provided by the remote terminal.

3. The method of claim 1, further comprising the step of connecting an operator to said remote terminal (12,40,46) to assist a user of said remote terminal (12,40,46) by entering a request for information from said user into a location-based application server (28).

4. The method of claim 3, further comprising the step of generating a structured response to said request for information with said location-based application server (28).

5. The method of claim 4, further comprising the step of transmitting said structured response to said remote terminal (12,40,46).

6. The method of claim 5, further comprising the step of transmitting said structured response to a voice synthesis server (33) that is operable to create a voice response that is sent to said remote terminal (12,40,46).

7. The method of claim 1, further comprising the step of generating a message notifying a user of said remote terminal (12,40,46) that an operator is being connected to said remote terminal (12,40,46).

8. The method of claim 1, further comprising: determining the geographic location of said remote terminal (12,40,46) by generating a location data request that is transmitted to a location gateway server (30) with an identifier of the remote terminal (12, 40, 46);
receiving a location value and said identifier from said location gateway server (30);
generating an operator message that includes said identifier and said location value; and
forwarding said operator message to a call center server.

9. A call failure system for a location-based services system, comprising:
a voice recognition application connected to a remote terminal (12,40,46) for interpreting a voice-based request for information generated by said remote terminal;
**characterised by**
a natural language processing application connected to said voice recognition application for determining the intent of the voice-based request for information; and
a call center server connected to said location-based services system,
wherein the call failure system is configured, in response to said natural language processing application failing to determine the intent of the said voice-based request for information to a predetermined level of accuracy, to:
determine a geographic location of said remote terminal;
route said remote terminal connection to the call center server; and
forward an indication of said geographic location of said remote terminal to said call center server.

10. The call failure system for a location-based services system of claim 9, wherein the determination of the geographic location by the call failure system comprises accessing an indication of a location of the remote terminal provided by the remote terminal.

11. The call failure system for a location-based services system of claim 9, wherein an operator connected to said call center server assists a user of said remote terminal (12,40,46) by entering a request for information into a location-based application server (28).

12. The call failure system for a location-based services system of claim 11, wherein said location-based application server (28) generates a structured response to said voice-based request for information.

13. The call failure system for a location-based services system of claim 12, wherein said structured response is transmitted to said remote terminal (12,40,46).

14. The call failure system for a location-based services system of claim 12, wherein said structured response is sent to a voice synthesis server that is operable to create a voice response that is sent to said remote terminal (12,40,46).

15. The call failure system for a location-based services system of claim 9, wherein a message is generated that is transmitted to said remote terminal (12,40,46) notifying a user of said remote terminal (12,40,46) that an operator is being connected to said remote terminal (12,40,46).

16. The call failure system for a location-based services system of claim 9, further comprising a location gateway server (30), wherein said call failure system is configured to generate and transmit a request that includes an identifier of said remote terminal (12,40,46) to said location gateway server(60), and said location gateway server (60), in response to said request, is configured to provide a geographic indicator to said call failure system based on said identifier.

17. The call failure system for a location-based services system of claim 16, wherein said call failure system is configured to forward said identifier and said geographic indicator to a call center server to enable an operator to assist a user of the remote terminal (12, 40, 46) by entering a request for information into a location-based application server (28) to provide a geographically targeted response to said remote terminal (12,40,46) based on said voice-based request for information and said geographic indicator.

## Patentansprüche

1. Verfahren zum Leiten von Anrufsfehlern, umfassend die Schritte:
Verbinden eines entfernten Endgeräts (12, 40, 46) mit einem standortbasierten Dienstesystem;
Erhalten einer sprachbasierten Anfrage nach Informationen von dem entfernten Endgerät;
Interpretieren der sprachbasierten Anfrage nach Informationen mit einer Spracherkennungsanwendung des standortbasierten Dienstesystems; wobei das Verfahren **dadurch gekennzeichnet ist,**
**dass** es ferner die Schritte umfasst:
Übertragen der Interpretation der sprachbasierten Anfrage nach Informationen von der Spracherkennungsanwendung zu einer Verarbeitungsanwendung für natürliche Sprache des standortbasierten Dienstesystems; und als Reaktion darauf, dass die Verarbeitungsanwendung für natürliche Sprache daran scheitert, die Absicht der sprachbasierten Anfrage nach Informationen mit einem vorbestimmten Genauigkeitsniveau zu interpretieren:
Bestimmen eines geographischen Standorts des entfernten Endgeräts;
Leiten der entfernten Endgerät-Verbindung zu einem mit dem standortbasierten Dienstesystem verbundenen Call-Center-Server; und
Weiterleiten einer Anzeige des geographischen Standorts des entfernten Endgeräts (12, 40, 46) zu dem Call-Center-Server.

2. Verfahren nach Anspruch 1, wobei der Schritt des Bestimmens des geographischen Standorts des entfernten Endgeräts ein Zugreifen auf eine Anzeige eines Standorts des entfernten Endgeräts umfasst, welche von dem entfernten Endgerät bereitgestellt wird.

3. Verfahren nach Anspruch 1, ferner umfassend den Schritt eines Verbindens eines Bedieners mit dem entfernten Endgerät (12, 40, 46), um einen Benutzer des entfernten Endgeräts (12, 40, 46) zu unterstützen, indem eine Anfrage nach Informationen von dem Benutzer in einen standortbasierten Anwendungsserver (28) eingegeben wird.

4. Verfahren nach Anspruch 3, ferner umfassend den Schritt eines Erzeugens einer strukturierten Antwort auf die Anfrage nach Informationen mit dem standortbasierten Anwendungsserver (28).

5. Verfahren nach Anspruch 4, ferner umfassend den Schritt eines Übertragens der strukturierten Antwort zu dem entfernten Endgerät (12, 40, 46).

6. Verfahren nach Anspruch 5, ferner umfassend den Schritt eines Übertragens der strukturierten Antwort zu einem Sprachsynthese-Server (33), welcher dazu betreibbar ist, eine Sprachantwort zu erzeugen, welche zu dem entfernten Endgerät (12, 40, 46) übertragen wird.

7. Verfahren nach Anspruch 1, ferner umfassend den Schritt eines Erzeugens einer Nachricht, welche einen Benutzer des entfernten Endgeräts (12, 40, 46) benachrichtigt, dass ein Bediener mit dem entfernten Endgerät (12, 40, 46) verbunden ist.

8. Verfahren nach Anspruch 1, ferner umfassend: Bestimmen des geographischen Standorts des entfernten Endgeräts (12, 40, 46) durch Erzeugen einer Standortdaten-Anfrage, welche zu einem Standort-Gatewayserver (30) mit einer Kennung des entfernten Endgeräts (12, 40, 46) übertragen wird;
Erhalten eines Standort-Werts und der Kennung von dem Standort-Gatewayserver (30);
Erzeugen einer Bediener-Nachricht, welche die Kennung und den Standort-Wert umfasst; und
Weiterleiten der Bediener-Nachricht an einen Call-Center-Server.

9. Anruffehlersystem für ein standortbasiertes Dienstesystem, umfassend:
eine Spracherkennungsanwendung, welche mit einem entfernten Endgerät (12, 40, 46) verbunden ist, zum Interpretieren einer sprachbasierten Anfrage nach Informationen, welche von dem entfernten Endgerät erzeugt wird;
**gekennzeichnet durch**
eine Verarbeitungsanwendung für natürliche Sprache, welche mit der Spracherkennungsanwendung zum Bestimmen der Absicht der sprachbasierten Anfrage nach Informationen verbunden ist; und
einen Call-Center-Server, welcher mit dem standortbasierten Dienstesystem verbunden ist, wobei das Anruffehlersystem dazu eingerichtet ist, als Reaktion darauf, dass die Verarbeitungsanwendung für natürliche Sprache daran scheitert, die Absicht der sprachbasierten Anfrage nach Informationen mit einem vorbestimmten Genauigkeitsniveau zu bestimmen:
einen geographischen Standort des entfernten Endgeräts zu bestimmen;
die Verbindung des entfernten Endgeräts zu dem Call-Center-Server zu leiten; und
eine Anzeige des geographischen Standorts des entfernten Endgeräts zu dem Call-Center-Server weiterzuleiten.

10. Anruffehlersystem für ein standortbasiertes Dienstesystem nach Anspruch 9, wobei die Bestimmung des geographischen Standorts durch das Anruffehlersystem ein Zugreifen auf eine Anzeige eines Standorts des entfernten Endgeräts umfasst, welche von dem entfernten Endgerät bereitgestellt wird.

11. Anruffehlersystem für ein standortbasiertes Dienstesystem nach Anspruch 9, wobei ein mit dem Call-Center-Server verbundener Bediener einen Benutzer des entfernten Endgeräts (12, 40, 46) unterstützt, indem eine Anfrage nach Informationen in einen standortbasierten Anwendungsserver (28) eingegeben wird.

12. Anruffehlersystem für ein standortbasiertes Dienstesystem nach Anspruch 11, wobei der standortbasierte Anwendungsserver (28) eine strukturierte Antwort auf die sprachbasierte Anfrage nach Informationen erzeugt.

13. Anruffehlersystem für ein standortbasiertes Dienstesystem nach Anspruch 12, wobei die strukturierte Antwort zu dem entfernten Endgerät (12, 40, 46) übertragen wird.

14. Anruffehlersystem für ein standortbasiertes Dienstesystem nach Anspruch 12, wobei die strukturierte Antwort zu einem Sprachsynthese-Server übertragen wird, welcher dazu betreibbar ist, eine Sprachantwort zu erzeugen, welche zu dem entfernten Endgerät (12, 40, 46) gesendet wird.

15. Anruffehlersystem für ein standortbasiertes Dienstesystem nach Anspruch 9, wobei eine Nachricht erzeugt wird, welche zu dem entfernten Endgerät (12, 40, 46) übertragen wird, welche einen Benutzer des entfernten Endgeräts (12, 40, 46) darauf hinweist, dass ein Bediener mit dem entfernten Endgerät (12, 40, 46) verbunden ist.

16. Anruffehlersystem für ein standortbasiertes Dienstesystem nach Anspruch 9, ferner umfassend einen Standort-Gatewayserver (30), wobei das Anruffehlersystem dazu eingerichtet ist, eine Anfrage zu erzeugen und zu dem Standort-Gatewayserver (60) zu übertragen, welche eine Kennung des entfernten Endgeräts (12, 40, 46) umfasst, und der Standort-Gatewayserver (60) dazu eingerichtet ist, als Reaktion auf die Anfrage dem Anruffehlersystem auf Grundlage der Kennung einen geographischen Anzeiger bereitzustellen.

17. Anruffehlersystem für ein standortbasiertes Dienstesystem nach Anspruch 16, wobei das Anruffehlersystem dazu eingerichtet ist, die Kennung und den geographischer Anzeiger an einen Call-Center-Server weiterzuleiten, um es einem Bediener zu ermöglichen, einen Benutzer des entfernten Endgeräts (12, 40, 46) zu unterstützen, indem eine Anfrage nach Informationen in einen standortbasierten Anwendungsserver (28) eingegeben wird, um dem entfernten Endgerät (12, 40, 46) auf Grundlage der sprachbasierten Anfrage nach Informationen und des geographischen Anzeigers eine geographisch gerichtete Antwort bereitzustellen.

## Revendications

1. Procédé permettant d'acheminer les échecs d'appel, comprenant les étapes qui consistent :
à connecter un terminal distant (12, 40, 46) à un système de services basé sur la localisation ;
à recevoir une demande vocale d'informations à partir dudit terminal distant ;
à interpréter ladite demande vocale d'informations avec une application de reconnaissance vocale du système de services basé sur la localisation ; où le procédé est **caractérisé en ce qu'**il comprend en outre les étapes qui consistent :
à transmettre ladite interprétation de ladite demande vocale d'informations depuis ladite application de reconnaissance vocale à une application de traitement de langage naturel du système de services basé sur la localisation ; et, en réponse au fait que ladite application de traitement de langage naturel échoue à interpréter l'intention de ladite demande vocale d'informations avec un niveau de précision prédéterminé :
à déterminer un emplacement géographique dudit terminal distant ;
à acheminer ladite connexion de terminal distant à un serveur de centre d'appels connecté audit système de services basé sur la localisation ; et
à transférer une indication depuis ledit emplacement géographique dudit terminal distant (12, 40, 46) audit serveur de centre d'appels.

2. Procédé de la revendication 1, dans lequel l'étape qui consiste à déterminer l'emplacement géographique dudit terminal distant comprend le fait d'accéder à une indication d'un emplacement du terminal distant fournie par le terminal distant.

3. Procédé de la revendication 1, comprenant en outre l'étape qui consiste à connecter un opérateur audit terminal distant (12, 40, 46) pour assister un utilisateur dudit terminal distant (12, 40, 46) en introduisant une demande d'informations provenant dudit utilisateur dans un serveur d'application basé sur la localisation (28).

4. Procédé de la revendication 3, comprenant en outre l'étape qui consiste à générer une réponse structurée à ladite demande d'informations avec ledit serveur d'application basé sur la localisation (28).

5. Procédé de la revendication 4, comprenant en outre l'étape qui consiste à transmettre ladite réponse structurée audit terminal distant (12, 40, 46).

6. Procédé de la revendication 5, comprenant en outre l'étape qui consiste à transmettre ladite réponse structurée à un serveur de synthèse vocale (33) qui peut fonctionner pour créer une réponse vocale qui est envoyée audit terminal distant (12, 40, 46).

7. Procédé de la revendication 1, comprenant en outre l'étape qui consiste à générer un message notifiant un utilisateur dudit terminal distant (12, 40, 46) qu'un opérateur est connecté audit terminal distant (12, 40, 46).

8. Procédé de la revendication 1, comprenant en outre le fait : de déterminer l'emplacement géographique dudit terminal distant (12, 40, 46) en générant une demande de données de localisation qui est transmise à un serveur de passerelle de localisation (30) avec un identifiant du terminal distant (12, 40, 46) ;
de recevoir une valeur de localisation et ledit identifiant à partir dudit serveur de passerelle de localisation (30) ;
de générer un message d'opérateur qui comporte ledit identifiant et ladite valeur de localisation ; et
de transférer ledit message d'opérateur à un serveur de centre d'appels.

9. Système d'échec d'appel pour un système de services basé sur la localisation, comprenant :
une application de reconnaissance vocale connectée à un terminal distant (12, 40, 46) pour interpréter une demande vocale d'informations générée par ledit terminal distant ;
**caractérisé par**
une application de traitement de langage naturel connectée à ladite application de reconnaissance vocale pour déterminer l'intention de la demande vocale d'informations ; et
un serveur de centre d'appels connecté audit système de services basé sur la localisation,
où le système d'échec d'appel est configuré, en réponse au fait que ladite application de traitement de langage naturel échoue à déterminer l'intention de ladite demande vocale d'informations avec un niveau de précision prédéterminé :
pour déterminer un emplacement géographique dudit terminal distant ;
pour acheminer ladite connexion de terminal distant au serveur de centre d'appels ; et
pour transférer une indication dudit emplacement géographique depuis ledit terminal distant audit serveur de centre d'appels.

10. Système d'échec d'appel pour un système de services basé sur la localisation de la revendication 9, dans lequel la détermination de l'emplacement géographique par le système d'échec d'appel comprend le fait d'accéder à une indication d'un emplacement du terminal distant fournie par le terminal distant.

11. Système d'échec d'appel pour un système de services basé sur la localisation de la revendication 9, dans lequel un opérateur connecté audit serveur de centre d'appels assiste un utilisateur dudit terminal distant (12, 40, 46) en introduisant une demande d'informations dans un serveur d'application basé sur la localisation (28).

12. Système d'échec d'appel pour un système de services basé sur la localisation de la revendication 11, dans lequel ledit serveur d'application basé sur la localisation (28) génère une réponse structurée à ladite demande vocale d'informations.

13. Système d'échec d'appel pour un système de services basé sur la localisation de la revendication 12, dans lequel ladite réponse structurée est transmise audit terminal distant (12, 40, 46).

14. Système d'échec d'appel pour un système de services basé sur la localisation de la revendication 12, dans lequel ladite réponse structurée est envoyée à un serveur de synthèse vocale qui peut fonctionner pour créer une réponse vocale qui est envoyée audit terminal distant (12, 40, 46).

15. Système d'échec d'appel pour un système de services basé sur la localisation de la revendication 9, dans lequel un message, qui est transmis audit terminal distant (12, 40, 46) notifiant un utilisateur dudit terminal distant (12, 40, 46) qu'un opérateur est connecté audit terminal distant (12, 40, 46), est généré.

16. Système d'échec d'appel pour un système de services basé sur la localisation de la revendication 9, comprenant en outre un serveur de passerelle de localisation (30), où ledit système d'échec d'appel est configuré pour générer et transmettre une demande qui comporte un identifiant dudit terminal distant (12, 40, 46) audit serveur de passerelle de localisation (60), et ledit serveur de passerelle de localisation (60), en réponse à ladite demande, est configuré pour fournir un indicateur géographique audit système d'échec d'appel sur la base dudit identifiant.

17. Système d'échec d'appel pour un système de services basé sur la localisation de la revendication 16, dans lequel ledit système d'échec d'appel est configuré pour transférer ledit identifiant et ledit indicateur géographique à un serveur de centre d'appels pour permettre à un opérateur d'assister un utilisateur du terminal distant (12, 40, 46) en introduisant une demande d'informations dans un serveur d'application basé sur la localisation (28) pour fournir une réponse géographiquement ciblée audit terminal distant (12, 40, 46) sur la base de ladite demande vocale d'informations et dudit indicateur géographique.
